# EUROPEAN PATENT APPLICATION

(11) **EP 4 838 899 A1**
(43) Date of publication of application: **11.11.2026**
(21) Application number: 25794844.8
(22) Date of filing: 05.02.2025
(51) Int. Cl.: H04N 21/8549, H04N 21/845, H04N 21/8405, H04N 21/44, G06F 16/74, G06F 16/783, G06F 16/732

(54) **ELECTRONIC DEVICE FOR GENERATING HIGHLIGHT VIDEO ON BASIS OF KEYWORD AND OPERATION METHOD THEREOF**

(30) Priority: 24.04.2024 KR 20240055014; 30.07.2024 KR 20240101277; 24.09.2024 KR 20240129421
(71) Applicant: Samsung Electronics Co., Ltd., Suwon-si, Gyeonggi-do 16677 (KR)
(72) Inventor: KIM, Woojae, Suwon-si, Gyeonggi-do 16677 (KR); KIM, Deokho, Suwon-si, Gyeonggi-do 16677 (KR); LEE, Gunill, Suwon-si, Gyeonggi-do 16677 (KR); LEE, Wonwoo, Suwon-si, Gyeonggi-do 16677 (KR); JEONG, Jiwon, Suwon-si, Gyeonggi-do 16677 (KR)
(74) Representative: Appleyard Lees IP LLP
(86) International application number: PCT/KR2025/001706
(87) International publication number: WO 2025/225844

(57) **Abstract**

Provided are an electronic device and a method for generating a highlight video, wherein the electronic device: obtains one or more keywords included in a plurality of frames of a video, obtains importance distribution information corresponding to each of the one or more keywords, determines at least one highlight keyword among the one or more keywords on the basis of the importance distribution information, displays the at least one highlight keyword, obtains an input corresponding to at least a part of the displayed at least one highlight keyword, and generates the highlight video on the basis of a highlight keyword corresponding to the input.

## Description

### Technical Field

The present disclosure relates to an electronic device for generating a highlight video and an operation method thereof. In particular, the present disclosure relates to an electronic device for obtaining a keyword of a video and generating the video based on the keyword, and an operation method thereof.

### Background Art

In the related art, a highlight section is identified based on image analysis such as a frame difference or voice analysis so as to generate a highlight video. Accordingly, in the related art, a highlight video may be generated while being specialized only in a specific field such as sports. In addition, in the related art, even when a highlight video is generated, it may be difficult for a user to interpret context of the generated highlight video. For example, it is difficult for the user to identify upon which criteria the highlight video has been determined to be a highlight. In addition, because the related art processes an entire video, it may be difficult to operate in a real-time mobile environment.

There may be a need for a method of generating a highlight video for all types of videos and providing a description related to the highlight video such that a user may understand and edit the highlight video.

The above information is provided only as background information to help with understanding the present disclosure. No decision has been made and no assertion is being made as to which of the above may be applied as the prior art in connection with the present disclosure.

### Disclosure of Invention

### Solution to Problem

In an embodiment of the present disclosure, a method, performed by an electronic device, of generating a highlight video based on a keyword is provided. The method may include obtaining one or more keywords included in a plurality of frames of a video. The method may include obtaining importance distribution information corresponding to each of the one or more keywords. The method may include determining at least one highlight keyword among the one or more keywords, based on the importance distribution information. The method may include displaying the at least one highlight keyword. The method may include obtaining an input corresponding to at least a portion of the displayed at least one highlight keyword. The method may include generating a highlight video, based on a highlight keyword corresponding to the input.

In an embodiment of the present disclosure, an electronic device for generating a highlight video based on a keyword is provided. The electronic device may include at least one processor including processing circuitry and memory storing at least one instruction. The at least one instruction, when executed by the at least one processor individually or collectively, may cause the electronic device to obtain one or more keywords included in a plurality of frames of a video. The at least one instruction, when executed by the at least one processor individually or collectively, may cause the electronic device to obtain importance distribution information corresponding to each of the one or more keywords. The at least one instruction, when executed by the at least one processor individually or collectively, may cause the electronic device to determine at least one highlight keyword among the one or more keywords, based on the importance distribution information. The at least one instruction, when executed by the at least one processor individually or collectively, may cause the electronic device to display the at least one highlight keyword. The at least one instruction, when executed by the at least one processor individually or collectively, may cause the electronic device to obtain an input corresponding to at least a portion of the displayed at least one highlight keyword. The at least one instruction, when executed by the at least one processor individually or collectively, may cause the electronic device to generate a highlight video, based on a highlight keyword corresponding to the input.

In an embodiment of the present disclosure, a computer-readable recording medium having recorded thereon a program for executing any one of the above-described methods and methods to be described below for performing an operation of an electronic device may be provided.

### Brief Description of Drawings

FIG. 1 is a diagram illustrating an operation, performed by an electronic device, of generating a highlight video based on a keyword, according to an embodiment of the present disclosure.
FIG. 2 is a flowchart illustrating a method of generating a highlight video based on a keyword, according to an embodiment of the present disclosure.
FIG. 3 is a diagram for describing a keyword of a video, according to an embodiment of the present disclosure.
FIG. 4 is a diagram illustrating importance distribution information corresponding to a keyword, according to an embodiment of the present disclosure.
FIG. 5 is a diagram for describing a highlight section, according to an embodiment of the present disclosure.
FIG. 6 is a diagram for describing a highlight section, according to an embodiment of the present disclosure.
FIG. 7 is a diagram illustrating a process of generating a highlight video, according to an embodiment of the present disclosure.
FIG. 8A is a diagram illustrating modules included in an electronic device 100, according to an embodiment of the present disclosure.
FIG. 8B is a diagram illustrating modules included in the electronic device 100, according to an embodiment of the present disclosure.
FIG. 9 is a diagram illustrating a plurality of groups obtained by dividing a video, according to an embodiment of the present disclosure.
FIG. 10 is a diagram for describing a process of generating a highlight video, according to an embodiment of the present disclosure.
FIG. 11 is a diagram illustrating a process of determining a highlight keyword and a general keyword, according to an embodiment of the present disclosure.
FIG. 12 is a diagram illustrating a user interface (UI) in which the electronic device 100 displays a highlight keyword, according to an embodiment of the present disclosure.
FIG. 13 is a diagram illustrating a UI in which the electronic device 100 edits a video, according to an embodiment of the present disclosure.
FIG. 14 is a diagram illustrating a UI including a search result of an image and/or a video, according to an embodiment of the present disclosure.
FIG. 15 is a diagram illustrating a UI for editing a plurality of videos by the electronic device 100, according to an embodiment of the present disclosure.
FIG. 16 is a diagram illustrating a UI for sharing a highlight video based on a keyword by the electronic device 100, according to an embodiment of the present disclosure.
FIG. 17 is a diagram illustrating a UI including a search result of an image and/or a video, according to an embodiment of the present disclosure.
FIG. 18 is a block diagram illustrating a configuration of an electronic device, according to an embodiment of the present disclosure.
FIG. 19 is a block diagram illustrating a configuration of an electronic device, according to an embodiment of the present disclosure.

### Mode for the Invention

In an embodiment of the present disclosure, the expression "at least one of a, b or c" may refer to "only a", "only b", "only c", "both a and b", "both a and c", "both b and c", "all of a, b, and c", or variations thereof.

In an embodiment of the present disclosure, the expression "a, b, and/or c" may be interpreted to be the same as the expression "at least one of a, b, or c". For example, the expression "a, b, and/or c" may refer to "only a", "only b", "only c", "both a and b", "both a and c", "both b and c", "all of a, b, and c", or variations thereof.

Although the terms used in an embodiment of the present disclosure are selected from among common terms that are currently widely used in consideration of their functions in an embodiment of the present disclosure, the terms may vary according to the intention of one of ordinary skill in the art, a precedent, or the advent of new technology. In addition, in certain cases, the terms are discretionally selected by the applicant, and in this case, the meaning may be understood through the corresponding description. Therefore, the terms used in an embodiment of the present disclosure are not merely designations of the terms, but the terms are defined based on the meaning of the terms and content throughout the present disclosure.

In an embodiment of the present disclosure, a singular expression may include a plural expression, unless the context clearly indicates otherwise. For example, the expression "constituent surface" may also include a case of referring to one or more of such surfaces. It will be understood that, although the terms "first", "second", etc. may be used in an embodiment of the present disclosure so as to describe various elements, these elements should not be limited by these terms. These terms are only used to distinguish one component from another component.

In an embodiment of the present disclosure, when a part "includes" or "comprises" a component, unless there is a particular description contrary thereto, it is understood that the part may further include other components, not excluding the other components. In an embodiment of the present disclosure, the terms such as "... unit," "module," or the like indicate a unit, which processes at least one function or operation, and the unit may be implemented by hardware or software, or by a combination of hardware and software.

In an embodiment of the present disclosure, the expression "configured to (or set to)" may be replaced with, for example, "suitable for," "having the capacity to," "designed to," "adapted to," "made to," or "capable of" according to cases. The expression "configured to (or set to)" may not necessarily mean "specifically designed to" at a hardware level. Alternatively, in some situations, the expression "system configured to ..." may mean that the system is "capable of ..." along with other devices or parts. For example, "a processor configured to (or set to) perform A, B, and C" may refer to a dedicated processor (e.g., an embedded processor) for performing a corresponding operation, or a general-purpose processor (e.g., a central processing unit (CPU) or an application processor (AP)) capable of performing a corresponding operation by executing one or more software programs stored in memory.

In an embodiment of the present disclosure, it should be understood that when components are "connected" or "coupled" to each other, the components may be directly connected or coupled to each other, but may alternatively be connected or coupled to each other with an element therebetween, unless specified otherwise.

When the present disclosure is described herein, descriptions of techniques which are well known in the technical field to which the present disclosure pertains and are not directly related to the present disclosure may be omitted. By omitting unnecessary explanations, the essence of the present disclosure may not be obscured and may be explicitly conveyed. In the drawings, for a more clear description of the present disclosure, parts or units that are not related to the present disclosure are omitted, and throughout the specification, like reference numerals in the drawings denote like components. The size of each component does not exactly correspond to an actual size of each component. In the drawings, the same or corresponding components are denoted by the same reference numerals.

The advantages and features of the present disclosure and methods of achieving them will become apparent with reference to embodiments described in detail below with reference to the accompanying drawings. The present disclosure may, however, be embodied in many different forms and should not be construed as limited to embodiments. The disclosed embodiments are provided such that the present disclosure will be thorough and complete, and will fully convey the scope of the present disclosure only defined by the claims to one of ordinary skill in the art. An embodiment of the present disclosure may be defined according to the claims.

In an embodiment of the present disclosure, each block of flowchart illustrations, and combinations of blocks in the flowchart illustrations, may be implemented by computer program instructions. The computer program instructions may be provided to a processor of a general-purpose computer, special purpose computer, or other programmable data processing apparatus, and the instructions, which are executed by the processor of the computer or other programmable data processing apparatus, may generate means for performing functions specified in the flowchart block(s). The computer program instructions may also be stored in a computer-executable or computer-readable memory that may direct the computer or other programmable data processing apparatus to function in a particular manner, and the instructions stored in the computer-executable or computer-readable memory produce an article of manufacture including instruction means that perform the functions specified in the flowchart block(s). The computer program instructions may also be loaded onto the computer or other programmable data processing apparatus. It should be understood that blocks in each flowchart and combinations of flowcharts may be performed by one or more computer programs including computer-executable instructions. The one or more computer programs may be all stored in single memory, or may be stored in a plurality of different memories in a distributed fashion. In an embodiment, the memory may include one or more storage media storing instructions.

All functions or operations described in an embodiment of the present disclosure may be processed by one processor or a combination of processors. One processor or a combination of processors may correspond to circuitry configured to perform processing, and may include circuitry such as an application processor (AP), a communication processor (CP), a graphical processing unit (GPU), a neural processing unit (NPU), a microprocessor unit (MPU), a system on chip (SoC), an integrated chip (IC), or the like.

At least one processor according to an embodiment of the present disclosure may include various types of processing circuitry and/or a plurality of processors. For example, the term "processor," as used in an embodiment of the present disclosure, including in the claims, may include various types of processing circuitry including at least one processor, wherein one or more of the at least one processor are configured to individually and/or collectively in a distributed manner perform the various functions described herein. As used herein, when "processor," "at least one processor," and "one or more processors" are described as being configured to perform various functions, such terms may include, for example, without limitation, a situation in which one processor performs. Some of the recited functions and other processor(s) perform other functions of the recited functions, and there are situations in which a single processor may perform all of the recited functions. In addition, the at least one processor may include a combination of processors that perform various listed/disclosed functions in a distributed manner. The at least one processor may execute program commands to achieve or perform various functions.

In an embodiment of the present disclosure, each block in the flowchart drawings may represent a module, a segment, or a portion of code including one or more executable instructions for executing specified logical function(s). In an embodiment of the present disclosure, it is also possible that the functions mentioned in the blocks occur out of the order. For example, two blocks shown in succession may be executed substantially concurrently or the blocks may be executed in the reverse order, depending upon the functionality involved.

The term "...unit" used in an embodiment of the present disclosure may refer to software or a hardware component such as a field programmable gate array (FPGA) or an application specific integrated circuit (ASIC), and the "...unit" may perform a specific function The "...unit" is not limited to software or hardware. The "...unit" may be configured so as to be in an addressable storage medium, or may be formed so as to operate one or more processors In an embodiment of the present disclosure, the "...unit" may include components such as software components, object-oriented software components, class components, and task components, processes, functions, attributes, procedures, subroutines, segments of program code, drivers, firmware, microcode, circuits, data, databases, data structures, tables, arrays, and variables. Functions provided through a specific component or a specific "...unit" may be combined to decrease the number thereof or separated into additional components. In an embodiment of the present disclosure, the "...unit" may include one or more processors.

Functions related to artificial intelligence according to an embodiment of the present disclosure are operated through a processor and memory. The processor may be composed of one or more processors. In this case, the one or more processors may each be a general-purpose processor such as a CPU, an AP, a digital signal processor (DSP), or the like, a graphic-dedicated processor such as a GPU, a vision processing unit (VPU), or an artificial intelligence-dedicated processor such as an NPU. The one or more processors perform control to process input data according to a predefined operation rule or an artificial intelligence model stored in the memory. Alternatively, when the one or plurality of processors are each an artificial intelligence-dedicated processor, the artificial intelligence-dedicated processor may be designed to have a hardware structure specialized for processing of a specific artificial intelligence model.

The predefined operation rule or the artificial intelligence model may be made through training. Here, being generated via a training process may mean that predefined operation rules or an artificial intelligence model set to perform desired characteristics (or purposes), is generated by training a basic artificial intelligence model by using a learning algorithm that utilizes a large amount of training data. Such training may be performed by a device on which artificial intelligence according to an embodiment of the present disclosure is implemented or by a separate server and/or a system. Examples of the learning algorithm may include, but are not limited to, supervised learning, unsupervised learning, semi-supervised learning, or reinforcement learning.

The artificial intelligence model may include a plurality of neural network layers. Each of the plurality of neural network layers has a plurality of weight values, and performs a neural network operation through an operation between an operation result of a previous layer and the plurality of weight values. The plurality of weight values of the plurality of neural network layers may be optimized due to a training result of the artificial intelligence model. For example, the plurality of weights may be updated to reduce or minimize a loss value or a cost value obtained by the artificial intelligence model during a training process. Examples of the artificial neural network may include a deep neural network (DNN), for example, a convolutional neural network (CNN), a deep neural network (DNN), a recurrent neural network (RNN), a restricted Boltzmann machine (RBM), a deep belief network (DBN), a bidirectional recurrent deep neural network (BRDNN), or a deep Q-networks, but are not limited thereto.

According to an embodiment of the present disclosure, a method of generating a highlight video by an electronic device may include obtaining output data by recognizing a keyword corresponding to at least a portion of a frame by using a frame of a video as input data of an artificial intelligence model so as to recognize a keyword. The artificial intelligence model may be generated via a training process. Here, being generated via a training process may mean that predefined operation rules or an artificial intelligence model set to perform desired characteristics (or purposes), is generated by training a basic artificial intelligence model by using a learning algorithm that utilizes a large amount of training data. The artificial intelligence model may include a plurality of neural network layers. Each of the neural network layers may include a plurality of weight values, and may perform a neural network arithmetic operation via an arithmetic operation between an arithmetic operation result of a previous layer and the plurality of weight values.

The visual understanding is a technique of recognizing and processing an object like human vision, and includes object recognition, object tracking, image retrieval, human recognition, scene recognition, three-dimensional (3D) reconstruction/localization, image enhancement, or the like.

Hereinafter, an embodiment of the present disclosure will now be described more fully with reference to the accompanying drawings for one of ordinary skill in the art to be able to perform the embodiment without any difficulty. However, the present disclosure may be embodied in many different forms and should not be construed as being limited to the embodiment set forth herein. In the drawings, for a more clear description of the present disclosure, parts or units that are not related to the present disclosure are omitted, and throughout the specification, like reference numerals in the drawings denote like components. In addition, reference numerals used in each drawing are only for describing each drawing, and different reference numerals used in each of the different drawings are not for indicating different components. Hereinafter, the present disclosure will be described in detail with reference to the accompanying drawings.

In the present disclosure, a "video" may include a plurality of still images. The video may include a plurality of still images in time series. For example, the video may represent the movement of an object included in the image, by configuring images captured consecutively in time series. In an embodiment of the present disclosure, the still image included in the video may be referred to as a frame. In an embodiment of the present disclosure, the video may further include sound data such as voice or music.

In the present disclosure, a "keyword" may include a word or phrase indicating a feature related to a video or a frame of the video. For example, a keyword may include a word or phrase including information about at least one of an emotion, an object, an action, a behavior, a situation, a place, or an event related to a video or a frame of the video. For example, a keyword may indicate at least one of an emotion, an object, an action, a behavior, a situation, a place, or an event included in a video or a frame of the video. The keyword may be stored, in the memory, as information related to the video or the frame of the video.

In the present disclosure, "importance distribution information" may include a distribution of importance of a keyword in a video. The importance score may indicate importance of a keyword in a video. In an embodiment of the present disclosure, the importance score may be determined to be high when a keyword is frequently identified in a partial section of the video. The importance score may be determined to be low when a keyword is identified many times in the entire section of the video. For example, an importance score for a keyword "pet" when the pet is identified for 50 seconds in a 1-minute video may be determined to be lower than an importance score when the pet is identified for 10 seconds. The importance distribution information may include time series data. The importance distribution information may include an importance score corresponding to time. For example, the importance distribution information may include an importance score according to a playback time of a video.

In the present disclosure, a "highlight keyword" may include a keyword identified in a small section of a video. The highlight keyword may be determined based on the importance distribution information. A keyword for which the importance score of the importance distribution information satisfies a defined condition may be determined as a highlight keyword. For example, a keyword in which a maximum value or average of the importance score is greater than a threshold value may be determined as the highlight keyword.

In the present disclosure, a "highlight video" may refer to an image generated using a portion of an original video. For example, the highlight video may include a frame corresponding to a highlight section among a plurality of frames of the original video. In an embodiment of the present disclosure, the highlight section may be determined based on the importance score of the highlight keyword. For example, a defined section around the highest point of the highlight keyword may be determined as the highlight section.

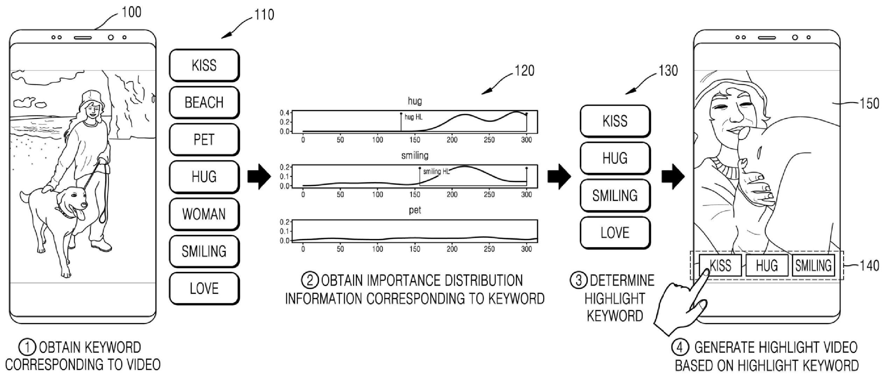

FIG. 1 is a diagram illustrating an operation, performed by an electronic device, of generating a highlight video based on a keyword, according to an embodiment of the present disclosure.

Referring to FIG. 1, an electronic device 100 may be a mobile device such as a smart phone, a tablet PC, a laptop computer, a digital camera, an electronic book terminal, a digital broadcasting terminal, a personal digital assistant (PDA), a portable multimedia player (PMP), a navigation device, or an MP3 player. In an embodiment of the present disclosure, the electronic device 100 may be a home appliance such as a TV, an air conditioner, a robot cleaner, or a clothing care machine. However, the present disclosure is not limited thereto, and in another embodiment of the present disclosure, the electronic device 100 may be implemented as a wearable device such as a smart watch, a glasses-type augmented reality device (e.g., augmented reality (AR) glasses), a head-mounted-device (HMD), or a body-attachable device (e.g., a skin pad).

Referring to FIG. 1, the electronic device 100 may obtain a keyword 110 for a video. In an embodiment of the present disclosure, the electronic device (100) may obtain one or more keywords included in a plurality of frames of the video. The electronic device (100) may obtain a keyword corresponding to a frame, by analyzing the frame of the video. For example, the electronic device 100 may obtain a keyword indicating an emotion, an object, an action, a behavior, a place, a situation, or an event included in the frame of the video. For example, the keyword may include a kiss, a beach, a pet, a hug, a woman, smiling, and love. The electronic device 100 may obtain a keyword 110 for the video, based on a keyword for each frame of the video.

The electronic device 100 may obtain importance distribution information 120 corresponding to the keyword 110. In an embodiment of the present disclosure, the electronic device 100 may obtain the importance distribution information 120 corresponding to each of one or more keywords. For example, the electronic device 100 may obtain the importance distribution information 120 corresponding to "hug" and the importance distribution information 120 corresponding to "smiling".

In an embodiment of the present disclosure, the importance distribution information 120 may include an importance score corresponding to time. The importance score may be determined to be high when a keyword is identified in a partial section of a video. For example, when the video includes a frame related to a hug in a period of 130 seconds to 310 seconds, the importance score for "hug" may be determined to be high in the period of 130 seconds to 310 seconds. The importance score may be determined to be low when the keyword is identified in the entire section of the video. For example, when the video includes a frame related to a pet in the entire section, an importance score for a "pet" may be determined to be low in the entire section.

The electronic device 100 may determine a highlight keyword 130. In an embodiment of the present disclosure, the electronic device 100 may determine the highlight keyword 130 based on the importance distribution information 120. When the importance score of the importance distribution information 120 satisfies a defined condition, the electronic device 100 may determine a keyword corresponding to the importance distribution information 120 as the highlight keyword. For example, the electronic device 100 may determine "hug" as the highlight keyword, based on a maximum value of the importance score of "hug" being greater than a threshold value. For example, based on a maximum value of the importance score of the "pet" being less than the threshold value, the "pet" may not be determined as the highlight keyword.

In an embodiment of the present disclosure, the electronic device 100 may determine at least some of the plurality of keywords of the video as highlight keywords, based on the importance distribution information 120.

The electronic device 100 may generate a highlight video 150, based on the highlight keyword 130. The electronic device 100 may generate the highlight video 150 to include a frame corresponding to the highlight keyword 130.

In an embodiment of the present disclosure, the electronic device 100 may display the highlight keyword 130. The electronic device 100 may display a user interface (UI) 140 corresponding to the highlight keyword 130. For example, the electronic device 100 may display the UI 140 corresponding to "kiss", "hug", and "smiling". The electronic device 100 may display the highlight keyword 130 without a portion thereof, based on the size of the UI 140 and the size of the displayed area.

The electronic device 100 may obtain an input corresponding to the UI 140. For example, the electronic device 100 may obtain a touch input to an area in which the UI 140 is displayed. For example, the electronic device 100 may obtain a voice input corresponding to the highlight keyword 130. In an embodiment of the present disclosure, the electronic device 100 may generate the highlight video 150, based on the highlight keyword 130 corresponding to the input. The electronic device 100 may determine a highlight section based on the highlight keyword 130 corresponding to the input. The highlight section may be determined based on the importance score of the highlight keyword 130. For example, the highlight section may be determined as a section in which the importance score is greater than the threshold value. For example, the highlight section for "hug" may be determined to be between 130 seconds and 310 seconds. The electronic device 100 may generate the highlight video to include a frame included in the highlight section.

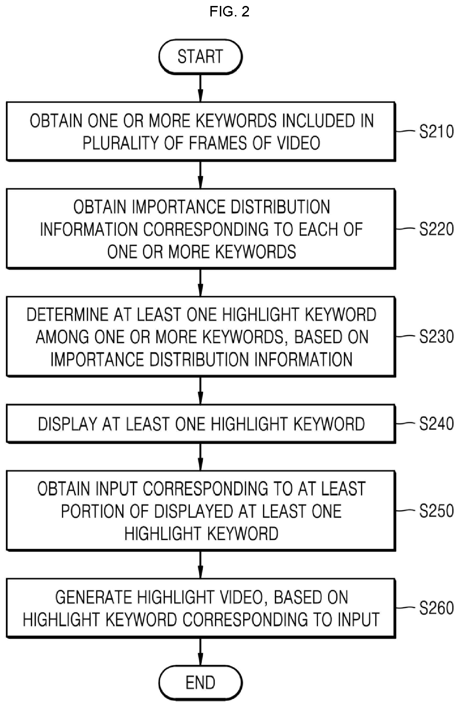

FIG. 2 is a flowchart illustrating a method of generating a highlight video based on a keyword, according to an embodiment of the present disclosure.

In an embodiment of the present disclosure, the method of generating a highlight video may be performed by the electronic device 100. For example, the electronic device 100 may perform each operation of an image decoding method by executing, by a processor of the electronic device 100, at least one instruction included in memory.

In operation S210, the method may include obtaining one or more keywords included in a plurality of frames of a video. The electronic device 100 may obtain the one or more keywords included in the plurality of frames of the video. For example, the electronic device 100 may extract a keyword for each frame of the video. The keyword may include a word indicating at least a portion of a frame. In an embodiment of the present disclosure, the electronic device 100 may select the keyword of the frame from words stored in a data base (DB).

In an embodiment of the present disclosure, the electronic device (100) may obtain the keyword included in the frame by using an artificial intelligence model. The artificial intelligence model may be trained to output a keyword included in a frame. The number of keywords output by the artificial intelligence model is not limited, and the artificial intelligence model may output one or more keywords. The artificial intelligence model may not output a keyword when there is no feature in the frame. The electronic device 100 may obtain a keyword and/or a confidence score corresponding to the keyword, by inputting a frame of the video to the artificial intelligence model. The confidence score may refer to a probability that the artificial intelligence model determines that an output keyword is included in the frame.

In an embodiment of the present disclosure, the electronic device (100) may obtain a keyword for each frame while capturing a video. For example, the electronic device (100) may obtain a keyword for each frame captured in real time while capturing the video. The electronic device (100) may extract a keyword from a frame independently of capturing the video.

In an embodiment of the present disclosure, the electronic device (100) may obtain a keyword for each frame after the capturing of the video is completed. For example, the electronic device 100 may obtain a keyword for each frame in a post-processing process after the capturing of the video is completed.

In operation S220, the method may include obtaining importance distribution information corresponding to each of the one or more keywords. The electronic device 100 may obtain the importance distribution information corresponding to each of the one or more keywords.

In an embodiment of the present disclosure, the importance distribution information may include an importance score corresponding to time. The importance score may be determined to be high when a keyword is identified only in a partial section of the video. The importance score may be determined to be low when a keyword is identified in the entire section of the video or the number of times the keyword is identified is small.

In operation S230, the method may include determining at least one highlight keyword among the one or more keywords, based on the importance distribution information. The electronic device 100 may determine at least one highlight keyword among the one or more keywords, based on the importance distribution information.

In an embodiment of the present disclosure, when the importance score of the importance distribution information satisfies a defined condition, the electronic device 100 may determine a keyword corresponding to the importance distribution information as a highlight keyword.

In operation S240, the method may include displaying the at least one highlight keyword. The electronic device 100 may display the at least one highlight keyword. In an embodiment of the present disclosure, the electronic device 100 may display a UI corresponding to the highlight keyword via the display.

In operation S250, the method may include obtaining an input corresponding to at least a portion of the displayed at least one highlight keyword. The electronic device 100 may obtain the input corresponding to at least the portion of the displayed at least one highlight keyword. In an embodiment of the present disclosure, the electronic device 100 may obtain a touch input or a voice input corresponding to the highlight keyword. For example, the electronic device 100 may obtain a touch input to an area displaying the UI corresponding to the highlight keyword or may obtain a voice input indicating the highlight keyword.

In operation S260, the method may include generating a highlight video, based on the highlight keyword corresponding to the input. The electronic device 100 may generate the highlight video, based on the highlight keyword corresponding to the input.

In an embodiment of the present disclosure, the electronic device 100 may determine a highlight section corresponding to the highlight keyword corresponding to the input. The electronic device 100 may generate the highlight video based on frames included in the highlight section.

In an embodiment of the present disclosure, the electronic device 100 may generate the highlight video by reflecting user's intention, by generating the highlight video corresponding to the input. The electronic device 100 may extract a keyword of the video and generate a highlight video based on the keyword, thereby providing a user with a reason why the highlight video is generated, and the user may change the highlight video by using a keyword. For example, the user may request a highlight video for a keyword of interest from the electronic device 100.

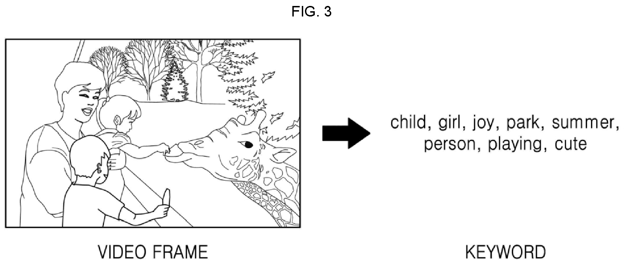

FIG. 3 is a diagram for describing a keyword of a video, according to an embodiment of the present disclosure.

In an embodiment of the present disclosure, the electronic device 100 may determine a keyword based on the video. The electronic device (100) may obtain a keyword corresponding to a frame of the video.

Referring to FIG. 3, for example, the frame of the video may be a scene in which a girl and a boy feed an animal outdoors. In an embodiment of the present disclosure, the keyword corresponding to the frame may include "child", "girl", "joy", "park", "summer", "person", "playing", and "cute".

In an embodiment of the present disclosure, the plurality of defined keywords may have a correlation. For example, in response to the frame including a girl, "child", "girl", and "person" may be selected. The electronic device 100 may determine a plurality of keywords corresponding to one object included in the frame. However, the present disclosure is not limited thereto, and the number of keywords corresponding to one object may be limited. For example, the number of keywords corresponding to one object may be limited to one.

In an embodiment of the present disclosure, the keyword may include feature information expressed in a natural language with respect to the video. In an embodiment of the present disclosure, the electronic device 100 may obtain feature information indicating at least one of an emotion, an object, an action, a behavior, a situation, a place, or an event included in the frame of the video. The electronic device 100 may determine a keyword of the video to include the keyword corresponding to the feature information. For example, the electronic device 100 may determine the keyword of the video to include a first keyword included in a first frame and a second keyword included in a second frame.

In an embodiment of the present disclosure, the electronic device 100 may determine a keyword by using an artificial intelligence model. The artificial intelligence model may be an artificial intelligence model trained to receive a frame of a video as an input and output a keyword corresponding to at least one of an emotion, an object, an action, a behavior, a situation, a place, or an event included in the frame. When there is no keyword corresponding to the frame, the electronic device 100 may not determine a keyword or may determine that there is no keyword. In an embodiment of the present disclosure, the artificial intelligence model may output a keyword together with a confidence score for the corresponding keyword. The confidence score may refer to a probability that the artificial intelligence model determines that an output keyword is included in the frame. For example, a keyword having a high confidence score may be determined, by the artificial intelligence model, to have a high probability of being included in a frame.

In an embodiment of the present disclosure, the electronic device 100 may select a keyword corresponding to at least a partial area of the frame among a plurality of defined keywords. For example, the electronic device 100 may select a keyword indicated by at least the partial area of the frame among the plurality of keywords included in a keyword DB.

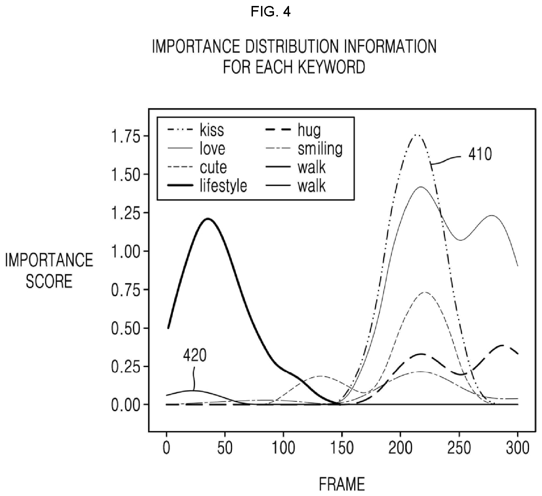

FIG. 4 is a diagram illustrating importance distribution information corresponding to a keyword, according to an embodiment of the present disclosure.

Referring to FIG. 4, importance distribution information for each keyword is shown. For example, the importance distribution information shown in FIG. 4 may correspond to each keyword included in a video. In an embodiment of the present disclosure, the importance distribution information may include a distribution of importance of a keyword of a video.

In an embodiment of the present disclosure, the importance distribution information may include information about an importance score according to a time or a frame of a video. The frame numbers may refer to the order in which frames are displayed. For example, the frame numbers may be displayed in increasing order starting from 0. The importance distribution information may be expressed as information about an importance score according to time.

In an embodiment of the present disclosure, the importance score may indicate the importance of a keyword in a video. The importance score may be determined based on the frequency of a keyword. For example, the importance score may be determined based on the number of times of keyword identified in a partial section of the video.

In an embodiment of the present disclosure, the importance score may be determined to be high when a keyword is frequently identified in a partial section of the video. A first distribution 410 indicates importance distribution information corresponding to the keyword "kiss". The first distribution 410 has a high importance score between 150 seconds and 250 seconds. The first distribution 410 may indicate that the keyword "kiss" is identified many times in the section of 150 seconds to 250 seconds of the video.

In an embodiment of the present disclosure, the importance score may be determined to be low when a keyword is identified many times in the entire section of the video. For example, a keyword that is identified many times in the entire section may be determined to have low importance for generating a highlight video. A second distribution 420 indicates importance distribution information corresponding to the keyword "walking". The second distribution 420 has a low importance score in every frame of the video. The second distribution 420 may mean that the keyword "walking" is identified many times in the entire section of the video.

In an embodiment of the present disclosure, the importance score may be determined to be low when a keyword is rarely identified in the entire section of the video. For example, a keyword that is rarely identified in the entire section may be determined to have low importance for generating a highlight video. The second distribution 420 may mean that the keyword "walking" is hardly identified in the entire section of the video.

In an embodiment of the present disclosure, the electronic device 100 may obtain a keyword included in a frame of a video, and may obtain importance distribution information corresponding to the keyword. The electronic device 100 may determine a highlight keyword based on the importance distribution information. In an embodiment of the present disclosure, the electronic device 100 may determine the highlight keyword of the video among keywords included in frames of the video. In an embodiment of the present disclosure, the highlight keyword may refer to a keyword indicating a moment of highlight while having a relatively high rarity.

In an embodiment of the present disclosure, the electronic device 100 may determine the highlight keyword based on an importance score. In an embodiment of the present disclosure, the electronic device 100 may determine a keyword whose importance score satisfies a defined condition as the highlight keyword. For example, the electronic device 100 may determine a keyword having a maximum value of the importance score greater than a threshold value as the highlight keyword. For example, the electronic device 100 may determine a keyword whose average value of importance score is greater than the threshold value as the highlight keyword. In an embodiment of the present disclosure, the electronic device 100 may determine only a defined number of keywords as highlight keywords in descending order of importance scores. In an embodiment of the present disclosure, the electronic device 100 may determine that a keyword whose importance score does not satisfy the defined condition is not the highlight keyword.

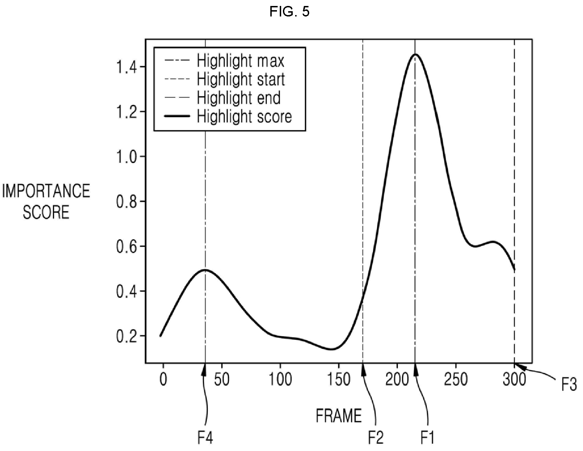

FIG. 5 is a diagram for describing a highlight section, according to an embodiment of the present disclosure.

In an embodiment of the present disclosure, the electronic device 100 may determine the highlight section based on importance distribution information. The importance distribution information may include an importance score of a keyword according to a frame or time of a video. Referring to FIG. 5, importance distribution information of an exemplary keyword is illustrated. The frame F1 may refer to a frame having a maximum importance score.

In an embodiment of the present disclosure, the electronic device 100 may determine the highlight section based on the importance distribution information. The electronic device 100 may determine the highlight section based on the importance score. The electronic device 100 may determine the highlight section based on the maximum value of the importance score. The electronic device 100 may determine a defined section including the maximum value of the importance score as the highlight section. For example, the electronic device 100 may determine a defined section including the frame F1 as the highlight section. The electronic device 100 may determine the highlight section to include a frame in which the importance score has the maximum value and a frame in which the importance score is greater than a threshold value. For example, the electronic device 100 may determine the highlight section to include the frame F1 and include a frame having an importance score of 40% or more of the maximum value.

In an embodiment of the present disclosure, the electronic device 100 may determine a start frame and an end frame of the highlight section. For example, the importance score of the frame F2 may be 40% of the importance score of the frame F1, and the frame F3 may be the last frame of the video. The electronic device 100 may store information about the start frame and the end frame of the highlight section.

In an embodiment of the present disclosure, the electronic device 100 may determine a plurality of highlight sections based on the importance distribution information. For example, the plurality of highlight sections may be determined to include a local maximum point of the importance distribution information. For example, the importance distribution information has a local maximum point of an importance score in the frame F1 and the frame F4. Accordingly, in this example, the electronic device 100 may determine a first highlight section including F1 and a second highlight section including F4. In an embodiment of the present disclosure, the electronic device 100 may determine a plurality of highlight sections by using an artificial intelligence model. For example, the electronic device 100 may determine the plurality of highlight sections by using a Gaussian mixture model (GMM).

In an embodiment of the present disclosure, the electronic device 100 may determine a highlight section only for a highlight keyword. The electronic device 100 may determine the highlight keyword based on importance distribution information and may determine the highlight section corresponding to the highlight keyword.

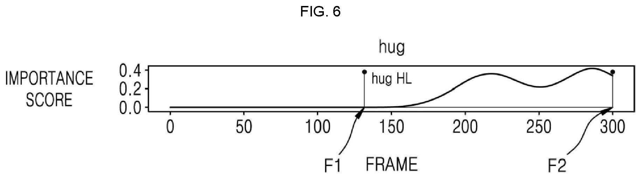

FIG. 6 is a diagram for describing a highlight section, according to an embodiment of the present disclosure.

In an embodiment of the present disclosure, the electronic device 100 may determine a highlight section based on importance distribution information. The importance distribution information may include an importance score of a keyword according to a frame or time of a video. Referring to FIG. 6, importance distribution information of exemplary keywords is shown.

In an embodiment of the present disclosure, the electronic device 100 may determine the highlight section, based on the importance distribution information. The electronic device 100 may determine the highlight section, based on the importance score. The electronic device 100 may determine the highlight section, based on the importance score. The electronic device 100 may determine, as the highlight section, a defined section including a frame having an importance score greater than a threshold value.

In an embodiment of the present disclosure, the electronic device 100 may determine a start frame and an end frame of the highlight section. The start frame and the end frame of the highlight section may each be one of a first frame of a video, a last frame of the video, or a frame having an importance score equal to a threshold value. For example, the start frame F1 of the highlight section has an importance score equal to the threshold value, and the end frame F2 of the highlight section is a last frame of the video. The electronic device 100 may store information about the start frame and the end frame of the highlight section.

In an embodiment of the present disclosure, the electronic device 100 may determine a plurality of highlight sections based on importance distribution information. For example, the electronic device 100 may determine a plurality of highlight sections having importance scores greater than a threshold value.

In an embodiment of the present disclosure, the electronic device 100 may determine the highlight section only for a highlight keyword. The electronic device 100 may determine the highlight keyword, based on the importance distribution information, and may determine the highlight section corresponding to the highlight keyword.

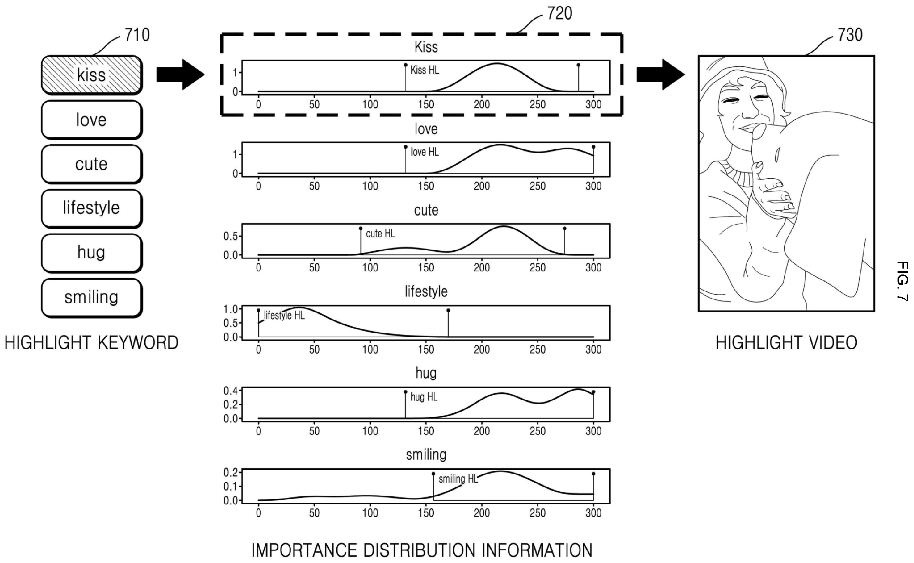

FIG. 7 is a diagram illustrating a process of generating a highlight video, according to an embodiment of the present disclosure.

In an embodiment of the present disclosure, the electronic device 100 may generate a highlight video 730 corresponding to a highlight keyword 710. The electronic device 100 may display the highlight keyword 710. For example, the electronic device 100 may output a UI corresponding to the highlight keyword 710 by using a display.

In an embodiment of the present disclosure, the electronic device 100 may obtain an input corresponding to the highlight keyword 710. A user may select at least a portion of the highlight keyword 710 displayed on the display. The electronic device 100 may obtain an input for selecting at least a portion of the highlight keyword 710. For example, the user may select "kiss" from the highlight keyword 710 displayed on the display, and the electronic device 100 may obtain an input for selecting "kiss" from the highlight keyword 710. The input may include at least one of a voice input or a touch input.

In an embodiment of the present disclosure, the electronic device 100 may determine a highlight section, based on the highlight keyword 710 corresponding to the input. The electronic device 100 may identify the highlight keyword 710 corresponding to the input, and may determine the highlight section, based on importance distribution information 720 of the highlight keyword 710. For example, the electronic device 100 may identify "kiss" corresponding to the input from the highlight keywords 710, and may determine the highlight section, based on the importance distribution information 720 of "kiss".

In an embodiment of the present disclosure, the electronic device 100 may determine the highlight section, based on a plurality of highlight keywords 710 corresponding to the input.

The electronic device 100 may obtain an input for a plurality of highlight keywords. In an embodiment of the present disclosure, the electronic device 100 may obtain a plurality of inputs indicating the highlight keywords 710. For example, the electronic device 100 may obtain a first input indicating a first highlight keyword "kiss" and a second input indicating a second highlight keyword "love". In an embodiment of the present disclosure, the electronic device 100 may obtain an input indicating the plurality of highlight keywords 710. For example, the electronic device 100 may obtain one input indicating the first highlight keyword "kiss" and the second highlight keyword "love".

The electronic device 100 may determine a plurality of highlight sections, based on the importance distribution information 720 corresponding to each highlight keyword 710. For example, the electronic device 100 may determine a first highlight section based on first importance distribution information corresponding to the first highlight keyword "kiss", and may determine a second highlight section based on second importance distribution information corresponding to the second highlight keyword "love". In this example, the electronic device 100 may determine the highlight section to include the first highlight section and the second highlight section.

In an embodiment of the present disclosure, the electronic device 100 may generate the highlight video 730 corresponding to the highlight section. The electronic device 100 may generate the highlight video 730 to include a plurality of frames of the video corresponding to the highlight section.

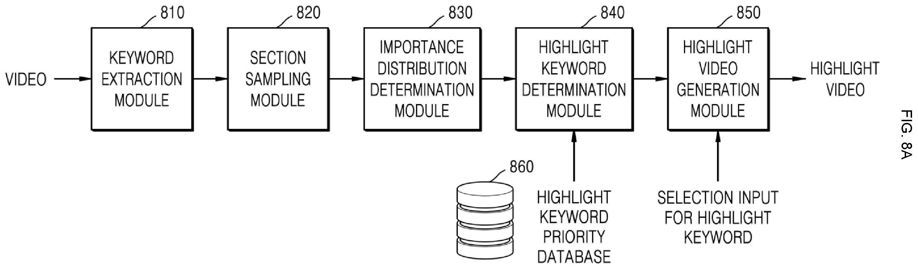

FIG. 8A is a diagram illustrating modules included in the electronic device 100, according to an embodiment of the present disclosure.

In an embodiment of the present disclosure, the electronic device 100 may include a keyword extraction module 810, a section sampling module 820, an importance distribution determination module 830, a highlight keyword determination module 840, and a highlight video generation module 850.

The keyword extraction module 810, the section sampling module 820, the importance distribution determination module 830, the highlight keyword determination module 840, and the highlight video generation module 850 included in the electronic device 100 of FIG. 8A may be components classified based on functions or roles. The keyword extraction module 810, the section sampling module 820, the importance distribution determination module 830, the highlight keyword determination module 840, and the highlight video generation module 850 included in the electronic device 100 of FIG. 8A may be software configurations implemented by the processor of the electronic device 1000 by executing a program or instructions stored in the memory, and may also be virtual configurations for which actually matched hardware devices exist. In other words, operations performed by the processor of the electronic device 1000 by executing the program or instructions stored in the memory may be classified into a plurality of groups for each function or purpose, and subjects to perform respective operations included in the classified groups may be expressed as the keyword extraction module 810, the section sampling module 820, the importance distribution determination module 830, the highlight keyword determination module 840, and the highlight video generation module 850 included in the electronic device 100 of FIG. 8A. The operations and functions described as being performed by the keyword extraction module 810, the section sampling module 820, the importance distribution determination module 830, the highlight keyword determination module 840, and the highlight video generation module 850 of FIG. 8A may be performed by the electronic device 100 or the processor of the electronic device 100 by executing the program or instructions stored in the memory.

In an embodiment of the present disclosure, the keyword extraction module 810 may obtain a keyword based on a video. The keyword extraction module 810 may obtain a keyword corresponding to each frame of the video. The keyword extraction module 810 may include an artificial intelligence model that outputs a keyword by using a frame as an input. The keyword may indicate at least a partial area of the frame of the video.

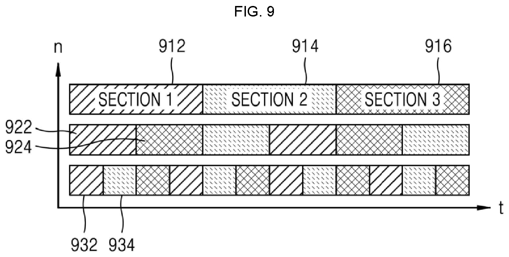

In an embodiment of the present disclosure, the section sampling module 820 may divide the video into a plurality of groups. The section sampling module 820 may divide the video into the plurality of groups, based on a division interval. For example, the section sampling module 820 may determine a group of the video in units of 30 frames. The division interval may mean a value determined to equally divide the video. In an embodiment of the present disclosure, a process of dividing a video into a plurality of groups will be described in detail with reference to FIG. 9.

In an embodiment of the present disclosure, the keyword extraction module 810 and the section sampling module 820 are sequentially connected, but may be processed in parallel, and the order between the keyword extraction module 810 and the section sampling module 820 may be exchanged.

In an embodiment of the present disclosure, the importance distribution determination module 830 may obtain importance distribution information corresponding to the keyword. In an embodiment of the present disclosure, the importance distribution determination module 830 may obtain importance distribution information including an importance score according to a time or a frame. In an embodiment of the present disclosure, the importance distribution determination module 830 may determine an importance score based on the frequency of a keyword included in a plurality of groups of a video.

In an embodiment of the present disclosure, the importance distribution determination module 830 may identify the number of frames including a first keyword among a plurality of frames included in a first group among the plurality of groups. For example, when the division interval is 30, the importance distribution determination module 830 may identify how many frames among the 30 frames include the first keyword. The importance distribution determination module 830 may identify the number of groups including the first keyword among the plurality of groups. For example, when the division interval is 30 and the entire frame of the video corresponds to 300 frames, the importance distribution determination module 830 may identify the number of groups including the first keyword among 10 groups. The importance distribution determination module 830 may obtain importance distribution information corresponding to the first keyword, based on the number of frames including the first keyword and the number of groups including the first keyword. For example, the importance distribution determination module 830 may determine the importance score to be higher as the number of frames including the first keyword increases, and may determine the importance score to be lower as the number of groups including the first keyword increases. In an embodiment of the present disclosure, the importance score may be determined based on Equation 1. [Equation 1] ${Score}_{k} = {\sum }_{D} {TF}_{k , d} \times log \left(\frac{N}{{df}_{k}}\right)$

Here, k denotes a keyword index, d denotes a group index, TF_{k,d} denotes the number of keywords included in a group, N denotes the number of all groups of a video, and dfₖ denotes the number of groups including keyword.

In an embodiment of the present disclosure, the importance distribution determination module 830 may obtain importance distribution information based on a ratio between the number of groups including the first keyword and the number of all groups included in the video. The importance distribution determination module 830 may determine the ratio between the number of groups including the first keyword and the number of all groups included in the video. For example, the importance distribution determination module 830 may determine N/dfₖ of Equation 1 and may obtain importance distribution information based on N/dfₖ.

In an embodiment of the present disclosure, the importance distribution determination module 830 may obtain importance distribution information based on a ratio between the number of frames of the first group including the first keyword and the total number of keywords included in the first group. The importance distribution determination module 830 may determine the ratio between the number of frames of the first group including the first keyword and the total number of keywords included in the first group. For example, the importance distribution determination module 830 may determine a ratio between TF_{k,d} of Equation 1 and the number of all keywords included in the first group d, and may obtain importance distribution information based on the determined ratio.

In an embodiment of the present disclosure, the importance score may be determined based on Equation 2 or Equation 3. [Equation 2] ${Score}_{k} = {\sum }_{D} {c}_{k , d} {TF}_{k , d} \times log \left(\frac{N}{{df}_{k}}\right)$

Here, c_{k,d} means a confidence score for a keyword, and the remaining variables may have the same meaning as in Equation 1.

In an embodiment of the present disclosure, the importance score may be determined based on Equation 3. [Equation 3] ${Score}_{k} = {\sum }_{D} {TF}_{k , d} \times exp \left(-T\frac{{df}_{k}}{N}\right)$

In an embodiment of the present disclosure, the importance distribution determination module 830 is not limited to Equations 1 to 3, and may determine the importance score such that the importance score increases when the number of keywords included in the group increases, and the importance score decreases when the number of groups including the keyword increases.

In an embodiment of the present disclosure, the importance distribution determination module 830 may obtain a confidence score indicating whether each frame included in the first group includes the first keyword. For example, the importance distribution determination module 830 may obtain c_{k,d} of Equation 2. In an embodiment of the present disclosure, the confidence score may be determined from the artificial intelligence model of the keyword extraction module 810. For example, the artificial intelligence model of the keyword extraction module 810 may determine a confidence score corresponding to the first keyword for each frame, and c_{k,d} in Equation 2 may refer to an average of confidence scores of the first keywords included in the first group. According to an embodiment of the present disclosure, the importance distribution determination module 830 may obtain importance distribution information corresponding to the first keyword, based on the plurality of confidence scores, the number of frames including the first keyword, and the number of groups including the first keyword.

In an embodiment of the present disclosure, the importance distribution determination module 830 may obtain importance distribution information based on an importance score for each section. The importance distribution determination module 830 may obtain an importance score for each frame by interpolating the importance score for each section.

In an embodiment of the present disclosure, the highlight keyword determination module 840 may determine the highlight keyword based on the importance distribution information. The highlight keyword determination module 840 may determine the highlight keyword based on the importance distribution information by using a highlight keyword determination method described in the present disclosure.

In an embodiment of the present disclosure, the highlight keyword determination module 840 may determine a highlight keyword, based on a highlight keyword priority DB 860. In an embodiment of the present disclosure, the highlight keyword priority DB 860 may store a weight for each keyword. In an embodiment of the present disclosure, the highlight keyword priority DB 860 may be stored in the memory of the electronic device 100 or may be obtained from an external electronic device. In an embodiment of the present disclosure, the highlight keyword determination module 840 may determine only keywords included in the highlight keyword priority DB 860 as highlight keywords.

The highlight keyword determination module 840 may determine the highlight keyword by applying a weight for each keyword to importance distribution information of each keyword. According to an embodiment of the present disclosure, the highlight keyword determination module 840 may determine the highlight keyword based on the importance distribution information to which the weight is applied by using the highlight keyword determination method described in the present disclosure. For example, a keyword having a low weight may not be selected as a highlight keyword even when an importance score of the distribution information of the keyword is high.

In an embodiment of the present disclosure, the highlight video generation module 850 may generate a highlight video corresponding to the highlight keyword. In an embodiment of the present disclosure, the highlight video generation module 850 may generate a highlight video to include frames of the video corresponding to the highlight section.

In an embodiment of the present disclosure, the highlight section may be determined by at least one of the importance distribution determination module 830, the highlight keyword determination module 840, or the highlight video generation module 850. The highlight section may be determined based on an importance score. For example, the highlight section may include a section having a high importance score.

In an embodiment of the present disclosure, the highlight video generation module 850 may obtain a selection input for the highlight keyword. The highlight keyword may be displayed via the display of the electronic device 100. The highlight keyword determination module 840 may obtain an input for selecting at least some of the displayed keywords. For example, the highlight keyword determination module 840 may obtain a selection input via an input interface. The highlight video generation module 850 may generate a highlight video corresponding to the highlight keyword corresponding to the input. The electronic device 100 may provide a highlight video appropriate for the user's intention by generating the highlight video based on an input for selecting a highlight keyword, and may provide a function for the user to modify the highlight video according to the user's intention.

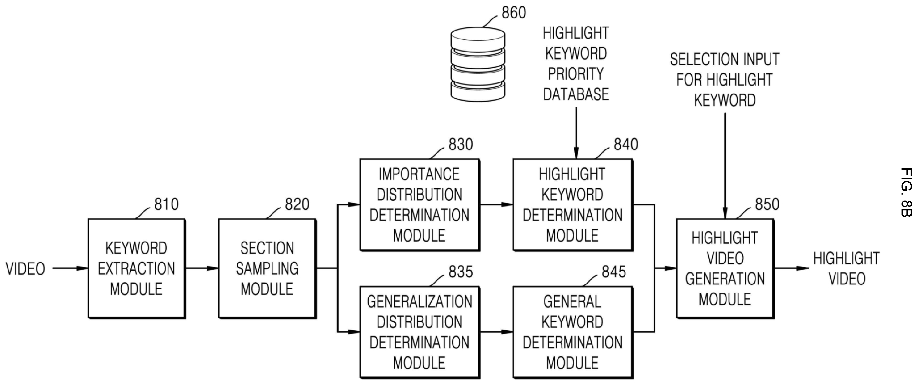

FIG. 8B is a diagram illustrating modules included in the electronic device 100, according to an embodiment of the present disclosure.

In an embodiment of the present disclosure, the electronic device 100 may include the keyword extraction module 810, the section sampling module 820, the importance distribution determination module 830, a generalization distribution determination module 835, the highlight keyword determination module 840, a general keyword determination module 845, and the highlight video generation module 850. In relation to the keyword extraction module 810, the section sampling module 820, the importance distribution determination module 830, the highlight keyword determination module 840, and the highlight video generation module 850, the descriptions made with reference to FIG. 8A will be omitted.

In an embodiment of the present disclosure, the generalization distribution determination module 835 may obtain generalization distribution information corresponding to a keyword. In an embodiment of the present disclosure, the generalization distribution determination module 835 may obtain generalization distribution information including a generalization score according to a time or a frame. In an embodiment of the present disclosure, the generalization distribution determination module 835 may determine a generalization score based on the frequency of a keyword included in a plurality of groups of the video.

In an embodiment of the present disclosure, the generalization distribution determination module 835 may identify the number of frames including a first keyword among a plurality of frames included in a first group among the plurality of groups. The generalization distribution determination module 835 may identify the number of groups including the first keyword among the plurality of groups. The generalization distribution determination module 835 may obtain generalization distribution information corresponding to the first keyword, based on the number of frames including the first keyword and the number of groups including the first keyword. For example, the generalization distribution determination module 835 may determine the generalization score to be higher as the number of frames including the first keyword increases, and may determine the generalization score to be higher as the number of groups including the first keyword increases. In an embodiment of the present disclosure, the generalization score may be determined based on Equation 4. [Equation 4] ${Score}_{k} = {\sum }_{D} \left({TF}_{k , d}\times {df}_{k}\right)$

Here, k denotes a keyword index, d denotes a group index, TF_{k,d} denotes the number of keywords included in a group, N denotes the number of all groups of a video, and dfₖ denotes the number of groups including the keyword.

In an embodiment of the present disclosure, the generalization distribution determination module 835 may obtain generalization distribution information based on the number of groups including the first keyword. For example, the generalization distribution determination module 835 may determine the generalization score to be higher as the number of groups including the first keyword increases, and may determine the generalization score to be lower as the number of groups including the first keyword decreases.

In an embodiment of the present disclosure, the generalization distribution determination module 835 may obtain generalization distribution information based on a ratio between the number of frames of the first group including the first keyword and the total number of keywords included in the first group. The generalization distribution determination module 835 may determine a ratio between the number of frames of the first group including the first keyword and the total number of keywords included in the first group. For example, the generalization distribution determination module 835 may determine a ratio between TF_{k,d} of Equation 1 and the number of all keywords included in the first group d, and may obtain the generalization distribution information based on the determined ratio.

In an embodiment of the present disclosure, the generalization score may be determined based on Equation 5. [Equation 5] ${Score}_{k} = {\sum }_{D} \left({c}_{k , d}{TF}_{k , d}\times {df}_{k}\right)$

Here, c_{k,d} means a confidence score for a keyword, and the remaining variables may have the same meaning as in Equation 4.

In an embodiment of the present disclosure, the generalization distribution determination module 835 is not limited to Equations 4 to 5, and may determine the generalization score such that the generalization score increases when the number of keywords included in the group increases, and the generalization score increases when the number of groups including the keyword increases.

In an embodiment of the present disclosure, the generalization distribution determination module 835 may obtain a confidence score indicating whether each frame included in the first group includes the first keyword. For example, the generalization distribution determination module 835 may obtain c_{k,d} of Equation 5. In an embodiment of the present disclosure, the confidence score may be determined by the method described with reference to FIG. 8A. According to an embodiment of the present disclosure, the generalization distribution determination module 835 may obtain generalization distribution information corresponding to the first keyword, based on a plurality of confidence scores, the number of frames including the first keyword, and the number of groups including the first keyword.

In an embodiment of the present disclosure, the generalization distribution determination module 835 may obtain generalization distribution information based on a generalization score for each section. The generalization distribution determination module 835 may obtain a generalization score for each frame by interpolating the generalization score for each section.

In an embodiment of the present disclosure, the general keyword determination module 845 may determine a general keyword based on the generalization distribution information. In an embodiment of the present disclosure, a "general keyword" may include a keyword identified in many sections of a video. The general keyword determination module 845 may determine a keyword as the general keyword when the generalization score satisfies a defined condition. For example, the general keyword determination module 845 may determine a keyword as the general keyword when the maximum value or average of the generalization score is greater than a threshold.

In an embodiment of the present disclosure, the importance distribution determination module 830 and the generalization distribution determination module 835 may be implemented as one module. For example, the module including the importance distribution determination module 830 and the generalization distribution determination module 835 may determine importance distribution information and generalization distribution information based on the frequency of a keyword. In an embodiment of the present disclosure, the highlight keyword determination module 840 and the general keyword determination module 845 may be implemented as one module. For example, the module including the importance distribution determination module 830 and the generalization distribution determination module 835 may determine a highlight keyword and a general keyword based on the importance distribution information and the generalization distribution information.

FIG. 9 is a diagram illustrating a plurality of groups obtained by dividing a video, according to an embodiment of the present disclosure.

In an embodiment of the present disclosure, the electronic device 100 may divide the video into the plurality of groups. The electronic device 100 may divide the video into the plurality of groups, based on a division interval. For example, the electronic device 100 may divide the video into a first group 912 corresponding to section 1, a second group 914 corresponding to section 2, and a third group 916 corresponding to section 3. The first group 912, the second group 914, and the third group 916 may include the same number of frames. The electronic device 100 may obtain importance distribution information and/or generalization distribution information based on the number of keywords included in the first group 912, the second group 914, and the third group 916.

In an embodiment of the present disclosure, the electronic device 100 may divide the video into the plurality of groups by using a plurality of division intervals. For example, referring to FIG. 9, the electronic device 100 may divide the video into the first group 912, the second group 914, and the third group 916 at a first division interval. The electronic device 100 may divide the video into a plurality of groups including a fourth group 922 and a fifth group 924 at a second division interval. The electronic device 100 may divide the video into a plurality of groups including a sixth group 932 and a seventh group 934 at a third division interval.

In an embodiment of the present disclosure, the second division interval may be half of the first division interval, and the third division interval may be half of the second division interval. However, the present disclosure is not limited thereto, and the plurality of division intervals may be independently determined.

In an embodiment of the present disclosure, the electronic device 100 may obtain importance distribution information and/or generalization distribution information based on the number of keywords included in the plurality of groups divided by using the plurality of division intervals. The electronic device 100 may obtain importance distribution information and/or generalization distribution information for each division interval.

In an embodiment of the present disclosure, the electronic device 100 may determine a highlight keyword for each division interval, based on the importance distribution information for each division interval. The electronic device 100 may determine a final highlight keyword based on the highlight keyword for each division interval.

In an embodiment of the present disclosure, the electronic device 100 may determine final importance distribution information and/or final generalization distribution information based on the importance distribution information and/or the generalization distribution information for each division interval. For example, the electronic device 100 may determine the final importance distribution information and/or the final generalization distribution information based on an average or sum of the importance score of the importance distribution information and/or the generalization score of the generalization distribution information for each division interval.

In an embodiment of the present disclosure, the electronic device 100 may determine the highlight keyword by using the final importance distribution information. The electronic device 100 may improve the reliability of the highlight keyword determination by determining the highlight keyword by using the plurality of division intervals.

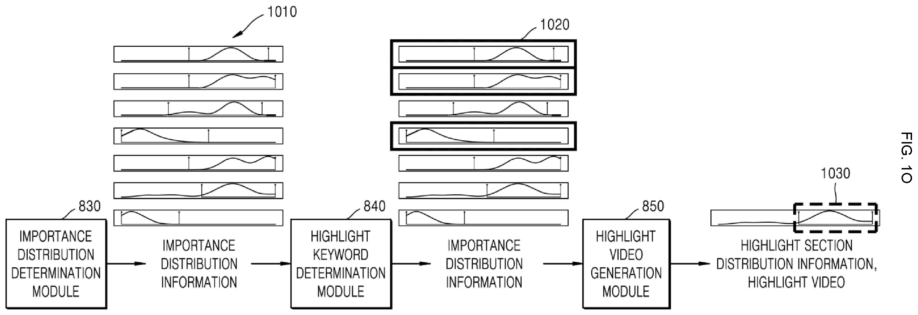

FIG. 10 is a diagram for describing a process of generating a highlight video, according to an embodiment of the present disclosure.

In an embodiment of the present disclosure, the electronic device 100 may generate a highlight video according to a defined rule. For example, instead of operations S240 to S260 of FIG. 2, the electronic device 100 may determine a highlight section based on a highlight keyword, and may generate a highlight video based on the highlight section.

In an embodiment of the present disclosure, the importance distribution determination module 830 may determine importance distribution information 1010 for each keyword. The importance distribution determination module 830 may determine the importance distribution information 1010 corresponding to each keyword of the video. For example, the importance distribution determination module 830 may obtain the importance distribution information 1010 related to each of kiss, love, cute, daily life, hug, smiling, and walking.

In an embodiment of the present disclosure, the highlight keyword determination module 840 may determine a highlight keyword. The highlight keyword determination module 840 may select some of a plurality of video keywords as highlight keywords. For example, the highlight keyword determination module 840 may determine "kiss", "love", and "daily life" as the highlight keywords.

In an embodiment of the present disclosure, the highlight video generation module 850 may generate a highlight video based on the highlight keyword. The highlight video generation module 850 may generate the highlight video, based on importance distribution information 1020 corresponding to the selected highlight keyword. For example, the highlight video generation module 850 may select all of the highlight keywords "kiss", "love", and "daily life", and may generate the highlight video based on the importance distribution information 1020 of "kiss", "love", and "daily life".

In an embodiment of the present disclosure, the highlight video generation module 850 may generate a highlight video according to a defined criterion. The highlight video generation module 850 may select at least some of the highlight keywords according to the defined criterion. The highlight video generation module 850 may generate the highlight video by using the selected highlight keywords.

In an embodiment of the present disclosure, the highlight video generation module 850 may select at least some of the highlight keywords, based on user preference information. The user preference information may include a keyword that the user was previously interested in and/or a keyword used in a previously generated highlight video.

In an embodiment of the present disclosure, the highlight video generation module 850 may select at least some of the highlight keywords, based on priority information. The priority information may include a predefined keyword priority. The highlight video generation module 850 may select some of the highlight keywords according to the priority based on the priority information.

In an embodiment of the present disclosure, the highlight video generation module 850 may determine a highlight section corresponding to the highlight keyword. The highlight section may be determined based on an importance score of the importance distribution information 1020. The highlight video generation module 850 may determine a final highlight section 1030 by combining highlight sections. For example, the highlight video generation module 850 may determine the final highlight section 1030 by combining the highlight sections of the selected highlight keywords so as to generate the highlight video.

The highlight video generation module 850 may generate a highlight video based on the final highlight section 1030. The highlight video generation module 850 may generate the highlight video to include the frame of the final highlight section.

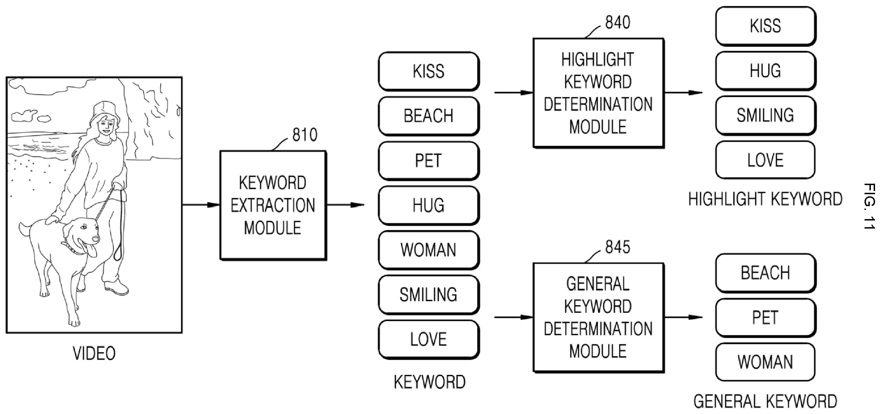

FIG. 11 is a diagram illustrating a process of determining a highlight keyword and a general keyword, according to an embodiment of the present disclosure.

In an embodiment of the present disclosure, the keyword extraction module 810 may obtain (e.g., extract or determine) keywords of a video. Referring to FIG. 11, for example, the video may include a frame in which a woman walks on the beach together with a pet. The keywords may include "woman", "pet", and "beach".

The highlight keyword determination module 840 may determine a highlight keyword among the keywords extracted by the keyword extraction module 810. For example, the highlight keyword may include kiss, hug, smiling, and love. The highlight keyword may be a keyword that appears many times in a partial section of the video. For example, the highlight keyword may be a keyword included only in frames of the partial section of the video. The highlight keyword may be used to determine a highlight section or generate a highlight video.

The general keyword determination module 845 may determine a general keyword among the keywords extracted by the keyword extraction module 810. For example, the general keyword may include a beach, a pet, and a woman. The general keyword may be a keyword that appears many times in the entire frame of the video. For example, the video may include a scene in which a woman and a pet are on the beach as a whole. The general keyword may be used to search a video. For example, because the general keyword appears in the entire section of the video, it may be appropriate for searching the video.

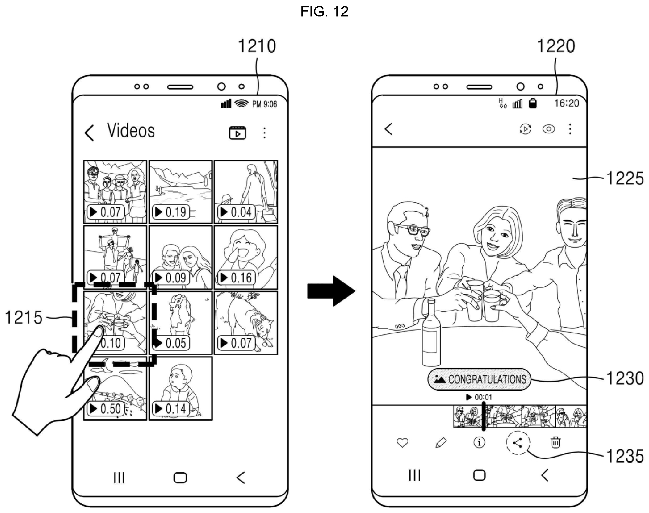

FIG. 12 is a diagram illustrating a UI in which the electronic device 100 displays a highlight keyword, according to an embodiment of the present disclosure.

In an embodiment of the present disclosure, the electronic device 100 may display an indicator of a video. For example, the electronic device 100 may display a highlight video with an indicator representing the video.

In an embodiment of the present disclosure, the electronic device 100 may display a stored video. The electronic device 100 may display a UI 1210 indicating a stored video. Referring to FIG. 12, the UI 1210 may include an area 1215 for displaying one or more stored videos. For example, the electronic device 100 may display the UI 1210 including an area for displaying an image representing a video or a portion (e.g., a highlight video) of the video. The UI 1210 may include an area for displaying a playback time of each video.

In an embodiment of the present disclosure, the electronic device 100 may obtain an input for selecting one of the videos. The electronic device 100 may display the selected video. In an embodiment of the present disclosure, the electronic device 100 may display an image representing a video or a highlight video. For example, the electronic device 100 may display a UI 1220 indicating a video selected in response to an input. The UI 1220 may include an area 1225 for displaying an image of the selected video or a highlight video, and an area 1230 for displaying a keyword corresponding to the displayed image or highlight video. For example, the electronic device 100 may display a highlight video, and may display a highlight keyword corresponding to a highlight section or frame of the displayed highlight video.

In an embodiment of the present disclosure, the electronic device 100 may transmit the highlight video to another electronic device. The UI 1220 may include an indicator indicating transmission of the highlight video to another electronic device. For example, the UI 1220 may include a share icon 1235. The user may check the highlight video displayed on the electronic device 100 and may share the highlight video with another electronic device.

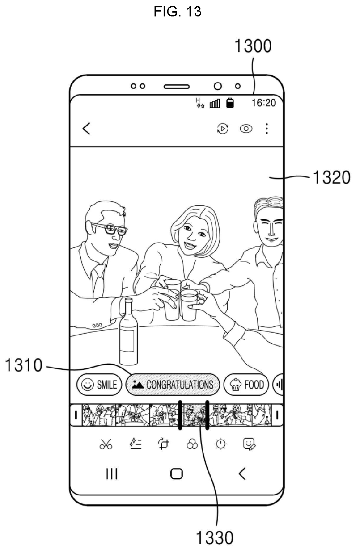

FIG. 13 is a diagram illustrating a UI in which the electronic device 100 edits a video, according to an embodiment of the present disclosure.

In an embodiment of the present disclosure, the electronic device 100 may transmit a highlight video to another electronic device, based on a keyword. The electronic device 100 may display a UI 1300 for editing a video. The electronic device 100 may display a keyword of the video. For example, referring to FIG. 13, the UI 1300 may include an area 1310 for displaying keywords. The electronic device 100 may display a video corresponding to a keyword. For example, the UI 1300 may include an area 1320 for displaying a video corresponding to a keyword. The electronic device 100 may display a section in which the video corresponding to the keyword is included in the highlight video. For example, the UI 1300 may include an area 1330 displaying a section in which a video corresponding to a keyword is included in a highlight video.

The electronic device 100 may generate a highlight video based on an input corresponding to a keyword. For example, the electronic device 100 may generate a highlight video including a highlight section corresponding to "congratulations" in the highlight video, based on an input for a keyword corresponding to "congratulations". The electronic device 100 may generate a highlight video based on the order of inputs. For example, the electronic device 100 may generate a highlight video including a highlight section for "food" after the highlight section corresponding to "congratulations" in the highlight video, based on an input for "food" being obtained after the input for "congratulations". In an embodiment of the present disclosure, the electronic device 100 may transmit, to another electronic device, a highlight video generated using one or more keywords.

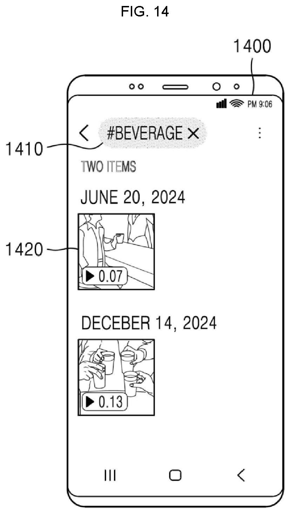

FIG. 14 is a diagram illustrating a UI including a search result of an image and/or a video, according to an embodiment of the present disclosure.

In an embodiment of the present disclosure, the electronic device 100 may indicate a search result of an image and/or a video based on a keyword. The electronic device 100 may display a UI 1400 indicating a search result of an image and/or a video. For example, referring to FIG. 14, the UI 1400 may include an area 1410 for displaying a found keyword and an area 1420 for displaying a video corresponding to the keyword.

In an embodiment of the present disclosure, the electronic device 100 may search for an image and/or a video based on a highlight keyword and/or a general keyword. The electronic device 100 may display an image and/or a video found based on the highlight keyword and/or the general keyword. For example, the electronic device 100 may display only an image and/or video having the found keyword as the highlight keyword, may display only an image and/or video having the found keyword as the general keyword, or may display an image and/or video having the found keyword as the highlight keyword or the general keyword.

In an embodiment of the present disclosure, the electronic device 100 may display a type of the keyword corresponding to the displayed image and/or video. For example, the electronic device 100 may display an indicator indicating that an image and/or video has a found keyword as a highlight keyword. For example, the electronic device 100 may display an indicator indicating that an image and/or video has a found keyword as a general keyword. Here, the indicator may be displayed by an icon, text, color, or a displayed area classification.

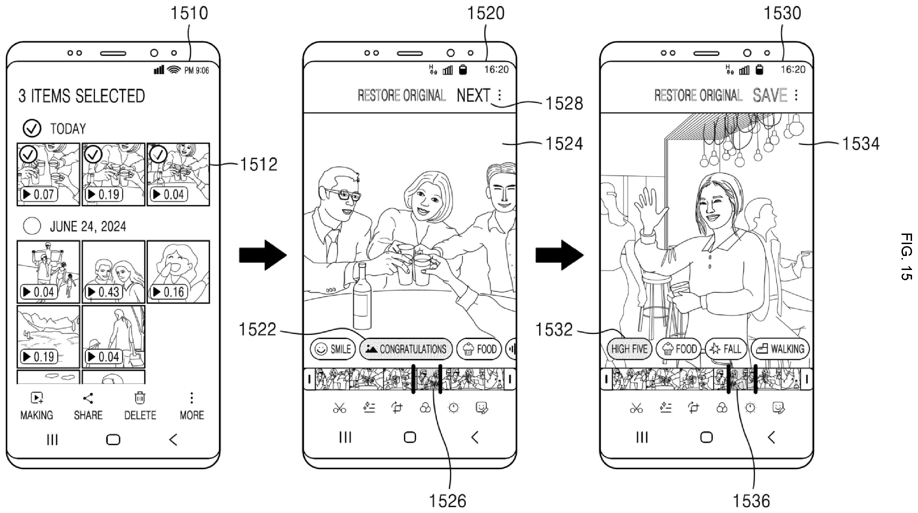

FIG. 15 is a diagram illustrating a UI for editing a plurality of videos by the electronic device 100, according to an embodiment of the present disclosure.

In an embodiment of the present disclosure, the electronic device 100 may generate a highlight video based on a plurality of videos. In an embodiment of the present disclosure, the electronic device 100 may display a stored video. The electronic device 100 may display a UI 1510 indicating the stored video. Referring to FIG. 15, the UI 1510 may include an area 1512 for displaying a plurality of stored videos. In an embodiment of the present disclosure, the UI 1510 may correspond to the UI 1210 of FIG. 12.

In an embodiment of the present disclosure, the electronic device 100 may obtain an input for selecting a plurality of videos. The electronic device 100 may display an indicator indicating the plurality of selected videos. For example, the electronic device 100 may display a check-marking icon on the plurality of selected videos. The electronic device 100 may generate a highlight video based on the plurality of selected videos.

The electronic device 100 may display a first video among the selected videos. For example, the electronic device 100 may display a UI 1520 for editing the first video. The electronic device 100 may display a keyword of the first video. For example, referring to FIG. 15, the UI 1520 may include an area 1522 for displaying a keyword. The electronic device 100 may display the first video corresponding to the keyword. For example, the UI 1520 may include an area 1524 for displaying the first video corresponding to the keyword. The electronic device 100 may display a section including the first video corresponding to the keyword. For example, the UI 1520 may include an area 1526 displaying a section including the first video corresponding to the keyword.

The electronic device 100 may generate a highlight video based on an input corresponding to the keyword. For example, the electronic device 100 may generate a highlight video including a highlight section corresponding to "congratulations" in the highlight video, based on an input for a keyword corresponding to "congratulations". The electronic device 100 may generate the highlight video based on one or more keywords of the first video. The electronic device 100 may display another video. For example, the UI 1520 may include an area 1528 for proceeding to an editing UI for the other video.

The electronic device 100 may display a second video among the selected videos. For example, the electronic device 100 may display a UI 1530 for editing the second video. The electronic device 100 may display a keyword of the second video. For example, the UI 1530 may include an area 1532 for displaying the keyword. The electronic device 100 may display the second video corresponding to the keyword. For example, the UI 1530 may include an area 1534 for displaying the second video corresponding to the keyword. The electronic device 100 may display a section including the second video corresponding to the keyword. For example, the UI 1530 may include an area 1536 displaying a section including the second video corresponding to the keyword.

The electronic device 100 may generate a highlight video based on an input corresponding to the keyword. For example, the electronic device 100 may generate the highlight video including a highlight section corresponding to "high five" in the highlight video, based on the input for the keyword corresponding to "high five". The electronic device 100 may generate the highlight video based on one or more keywords of the second video.

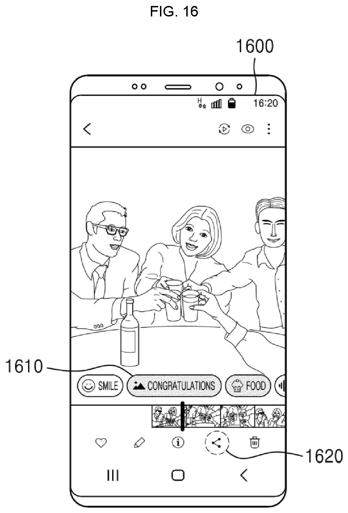

FIG. 16 is a diagram illustrating a UI for sharing a highlight video based on a keyword by the electronic device 100, according to an embodiment of the present disclosure.

In an embodiment of the present disclosure, the electronic device 100 may transmit a highlight video to another electronic device based on a keyword. The electronic device 100 may display a UI 1600 for editing a video. The electronic device 100 may display a keyword of the video. For example, referring to FIG. 16, the UI 1600 may include an area 1610 for displaying a keyword. The electronic device 100 may display a video corresponding to the keyword. The electronic device 100 may display a section in which the video corresponding to the keyword is included in the highlight video.

The electronic device 100 may obtain an input corresponding to a plurality of keywords. For example, the electronic device 100 may obtain an input corresponding to "congratulations" and "food". The electronic device 100 may transmit, to another electronic device, the highlight video generated based on the plurality of keywords corresponding to the input. For example, the UI 1600 may include, for example, a share icon 1620. The user may check the highlight video displayed on the electronic device 100 and share the highlight video with another electronic device.

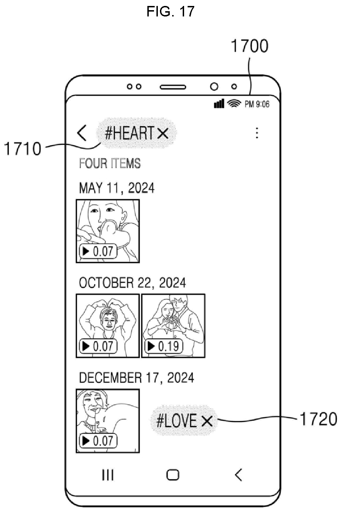

FIG. 17 is a diagram illustrating a UI including a search result of an image and/or a video, according to an embodiment of the present disclosure.

In an embodiment of the present disclosure, the electronic device 100 may indicate a search result of an image and/or a video based on a keyword. The electronic device 100 may display a UI 1700 indicating a search result of an image and/or a video. For example, referring to FIG. 17, the UI 1700 may include an area 1710 for displaying a found keyword and an area 1720 for displaying a video corresponding to a keyword.

In an embodiment of the present disclosure, the electronic device 100 may search for an image and/or a video based on a highlight keyword and/or a general keyword. The electronic device 100 may display an image and/or a video found based on the highlight keyword and/or the general keyword. The electronic device 100 may display a video having a found keyword as a highlight keyword and/or a general keyword or a video having a keyword similar to the found keyword as a highlight keyword and/or a general keyword.

In an embodiment of the present disclosure, the electronic device 100 may display a type of the keyword corresponding to the displayed image and/or video. For example, the electronic device 100 may display an indicator indicating that an image and/or video has a found keyword as a highlight keyword. For example, the electronic device 100 may display an indicator indicating that an image and/or video has a found keyword as a general keyword. For example, the electronic device 100 may display an indicator indicating that an image and/or video has a keyword similar to the found keyword as the general keyword. For example, the electronic device 100 may display a video having a keyword "love" similar to a found keyword "heart" as a highlight keyword.

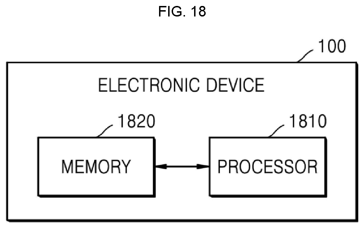

FIG. 18 is a block diagram illustrating a configuration of an electronic device, according to an embodiment of the present disclosure.

In an embodiment of the present disclosure, the electronic device 100 may include a processor 1810 and memory 1820.

The processor 1810 may control all operations of the electronic device 100. For example, the processor 1810 may be configured to execute one or more instructions of a program stored in the memory 1820 to control all operations for the electronic device 100 to generate a highlight video. In an embodiment of the present disclosure, the processor 1810 may include a plurality of processors. For example, the plurality of processors may individually or collectively execute the one or more instructions of the program stored in the memory 1820 to control all operations for the electronic device 100 to generate the highlight video.

In an embodiment of the present disclosure, the processor 1810 may include a configuration for controlling a series of processes such that the electronic device 100 operates according to embodiments described in the present disclosure. The processor 1810 may include one or more processors. The one or more processors included in the processor 1810 may include circuitry such as a system on chip (SoC), an integrated circuit (IC), or the like. The processor 1810 may include the one or more processors each including a central processing unit (CPU), a micro-processor unit (MPU), an application processor (AP), a digital signal processor (DSP), a graphics processing unit (GPU), a vision processing unit (VPU), an application specific integrated circuit (ASIC), a programmable logic device (PLD), a field programmable gate array (FPGA), a neural processing unit (NPU), a communication processor, and/or an artificial intelligence-dedicated processor designed in a hardware structure for processing an artificial intelligence model, but is not limited thereto.

Although not illustrated in FIG. 18, the electronic device 100 may further include additional configurations to perform the operations described in the above-described embodiments. For example, the electronic device 100 may further include a display, a camera, a microphone, a speaker, an input/output interface, or the like.

When the method according to an embodiment of the present disclosure includes a plurality of operations, the plurality of operations may be performed by one processor or may be performed by a plurality of processors. For example, when a first operation, a second operation, and a third operation are performed by the method according to an embodiment of the present disclosure, all of the first operation, the second operation, and the third operation may be performed by a first processor, or, alternatively, the first operation and the second operation may be performed by the first processor (e.g., a general-purpose processor), and the third operation may be performed by a second processor (e.g., an artificial intelligence-dedicated processor). Here, the artificial intelligence-dedicated processor that is an example of the second processor may perform operations for training/inference of the artificial intelligence model. However, embodiments of the present disclosure are not limited thereto.

The one or more processors 1810 according to the present disclosure may be implemented as a single-core processor or a multi-core processor.

When the method according to an embodiment of the present disclosure includes a plurality of operations, the plurality of operations may be performed by one core or may be performed by a plurality of cores included in one or more processors.

The at least one processor 1810 according to an embodiment of the present disclosure may include various types of processing circuitry and/or a plurality of processors. For example, the term "processor," as used herein, including in the claims, may include various types of processing circuitry including at least one processor, wherein one or more of the at least one processor are configured to individually in a distributed manner and/or collectively perform the various functions described herein. As used herein, when "processor," "at least one processor," and "one or more processors" are described as being configured to perform various functions, such terms may include, for example, without limitation, a situation in which one processor performs. Some of the recited functions and other processor(s) perform other functions of the recited functions, and there are situations in which a single processor may perform all of the recited functions. In addition, the at least one processor may include a combination of processors that perform various listed/disclosed functions in a distributed manner. The at least one processor may execute program commands to achieve or perform various functions.

The memory 1820 may store instructions, a data structure, and program code that are readable by the processor 1810. Operations performed by the processor 1810 may be implemented by executing instructions or codes of a program stored in the memory 1820.

The memory 1820 may include at least one of volatile memory and non-volatile memory. For example, the memory 1820 may include at least one of a flash memory type, a hard disk type, a multimedia card micro type, a card type memory (e.g., an SD or XD memory), a read-only memory (ROM), an electrically erasable programmable read-only memory (EEPROM), a programmable read-only memory (PROM), a magnetic memory, a magnetic disk, an optical disk, a random access memory (RAM), or a static random access memory (SRAM).

The memory 1820 may store one or more instructions and/or programs that cause the electronic device 100 to operate to generate a highlight video. For example, the memory 1820 may store instructions and/or programs for implementing operations for generating a highlight video. The processor 1810 may write data to the memory 1820 or may read data stored in the memory 1820. The processor 1810 may execute a program or at least one instruction stored in the memory 1820 to process data according to a predefined operation rule or an artificial intelligence model. The processor 1810 may perform operations described in the embodiments of the present disclosure.

The memory 1820 may further store instructions and/or programs for implementing functions of at least one of a keyword extraction module, a section sampling module, an importance distribution information generation module, a generalization distribution information generation module, a highlight keyword determination module, a general keyword determination module, or a highlight video generation module.

In an embodiment of the present disclosure, the at least one instruction stored in the memory 1820, when executed by the at least one processor 1810 individually or collectively, may cause the electronic device to obtain one or more keywords included in a plurality of frames of a video. The at least one instruction, when executed by the at least one processor 1810 individually or collectively, may cause the electronic device to obtain importance distribution information corresponding to each of one or more keywords. The at least one instruction, when executed by the at least one processor 1810 individually or collectively, may cause the electronic device to determine at least one highlight keyword among the one or more keywords based on the importance distribution information. The at least one instruction, when executed by the at least one processor 1810 individually or collectively, may cause the electronic device to display at least one highlight keyword. The at least one instruction, when executed by the at least one processor 1810 individually or collectively, may cause the electronic device to obtain an input corresponding to at least a portion of the displayed at least one highlight keyword. The at least one instruction, when executed by the at least one processor 1810 individually or collectively, may cause the electronic device to generate a highlight video based on a highlight keyword corresponding to the input.

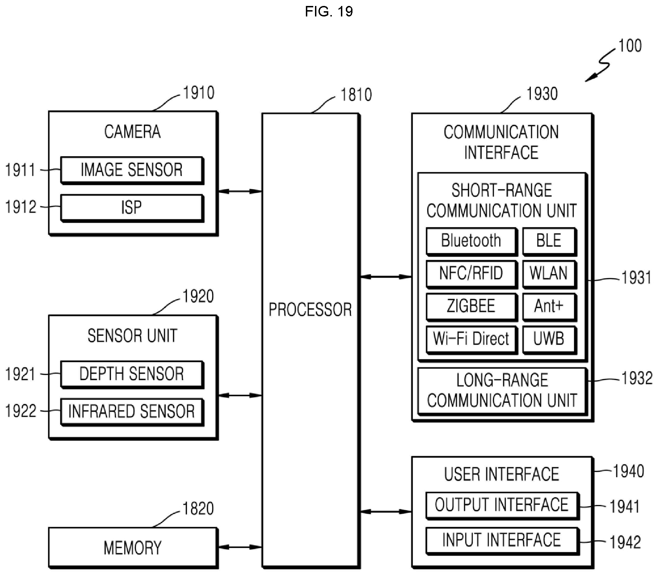

In an embodiment of the present disclosure, the electronic device 100 may include other configurations in addition to the processor 1810 and the memory 1820. In an embodiment of the present disclosure, a configuration that the electronic device 100 may include will now be described in detail with reference to FIG. 19.

FIG. 19 is a block diagram illustrating a configuration of an electronic device, according to an embodiment of the present disclosure.

As shown in FIG. 19, the electronic device 100 according to an embodiment of the present disclosure may further include a camera 1910, a sensor unit 1920, a communication interface 1930, and/or a user interface 1940, in addition to the processor 1810 and the memory 1820.

The processor 1810 controls an operation of the electronic device 100. The processor 1810 may execute programs stored in the memory 1820 to control the camera 1910, the sensor unit 1920, the communication interface 1930, the user interface 1940, and the memory 1820.

The memory 1820 may store a program for processing and control by the processor 1810, and may store input/output data (e.g., a keyword, a highlight keyword, or a general keyword of a video, etc.). The memory 1820 may store an artificial intelligence model. For example, the memory 1820 may store the artificial intelligence model for obtaining a keyword.

The camera 1910 may refer to a device that obtains at least one frame. Here, the at least one frame may be expressed as an image (a still image or a video) or a picture.

The camera 1910 may include a wide-angle camera and/or a telephoto camera capable of photographing the front or rear of the electronic device 100. The camera 1910 may include a subminiature camera or a pinhole camera. In an embodiment of the present disclosure, the electronic device 100 may include the plurality of cameras 1910.

The camera 1910 may include an image sensor 1911 and/or an image signal processor (ISP) 1912. The image sensor 1911 may include a device for identifying light transmitted through the lens of the camera 1910. The image signal processor 1912 may refer to a processor that processes a signal identified by the image sensor 1911. In an embodiment of the present disclosure, the image signal processor 1912 may perform primary correction on the distortion caused by the camera 1910.

The sensor unit 1920 may include a depth sensor 1921 and/or an infrared sensor 1922, but is not limited thereto. The depth sensor 1921 may include a sensor that measures depth information of an object. The infrared sensor 1922 may include a sensor that measures a numerical value by using infrared rays. The infrared sensor 1922 may measure depth information of the object by using infrared rays.

The sensor unit 1920 may obtain depth information by using an ultra-wideband (UWB) sensor. The UWB sensor may measure a round trip time of a UWB signal. The sensor unit 1920 may determine depth information based on the round trip time of the UWB signal.

The communication interface 1930 may include one or more components for performing communication between the electronic device 100 and a server device or between the electronic device 100 and a mobile terminal. For example, the communication interface 1930 may include a short-range communication unit 1931, a long-range communication unit 1932, or the like.

The short-range communication unit 1931 may include a Bluetooth communication unit, a Bluetooth Low Energy (BLE) communication unit, a near field communication unit (NFC) communication unit, a Wi-Fi (WLAN) communication unit, a ZigBee communication unit, an infrared Data Association (IrDA) communication unit, a Wi-Fi Direct (WFD) communication unit, an ultra wideband (UWB) communication unit, or an Ant+ communication unit, but the present disclosure is not limited thereto.

The long-range communication unit 1932 may include the Internet, a computer network (e.g., LAN or WAN), and a mobile communication unit. The mobile communication unit transmits and receives wireless signals to and from at least one of a base station, an external terminal, or a server in a mobile communication network. For example, the wireless signals may include various types of data based on transmission and reception of voice call signals, video call signals, or text/multimedia messages. The mobile communication unit may include a 3^{rd} generation (3G) module, a 4^{th} generation (4G) module, a 5^{th} generation (5G) module, a long-term evolution (LTE) module, a narrowband Internet of Things (NB-IoT) module, a long term evolution for machine (LTE-M) module, or the like, but the present disclosure is not limited thereto.

The user interface 1940 may include an output interface 1941 and an input interface 1942. The output interface 1941 may output an audio signal or a video signal and may include, for example, a display and/or a sound output unit.

In an embodiment of the present disclosure, the display may be configured as a touch screen by forming a layer structure with a touch pad. When the display and the touch pad form a layer structure and are configured as the touch screen, the display may be used as both the output interface 1941 and the input interface 1942. The display may include at least one of a liquid crystal display, a thin film transistor-liquid crystal display, a light-emitting diode (LED), an organic light-emitting diode, a flexible display, a 3D display, or an electrophoretic display. In addition, the electronic device 100 may include two or more displays according to an implementation form of the electronic device 100. For example, the electronic device 100 may include a display in a front direction and a display in a rear direction opposite to the front direction.

According to an embodiment of the present disclosure, the display may display and output information processed by the electronic device 100. For example, the display may display an image captured by the camera 1910 of the electronic device 100 in real time or may display an image, a video, and/or a highlight video stored in the memory 1820. For example, the display may display the UI described with reference to FIGS. 12 to 17. The display may output an interface for controlling the electronic device 100, an interface for displaying a state of the electronic device 100, or the like.

The sound output unit may output audio data received from the communication interface 1930 or stored in the memory 1820. In addition, the sound output unit may output a sound signal related to a function performed by the electronic device 100. For example, the sound output unit may include a speaker or a buzzer. For example, the speaker or the buzzer may output, as sound, a signal related to a function (e.g., a call signal reception sound, a message reception sound, or a notification sound) performed by the electronic device 1000.

The input interface 1942 may receive an input from a user. The input interface 1942 may include at least one of a key pad, a dome switch, a touch pad (a touch capacitive type touch pad, a pressure resistive type touch pad, an infrared beam sensing type touch pad, a surface acoustic wave type touch pad, an integral strain gauge type touch pad, a piezo effect type touch pad, or the like), a jog wheel, a jog switch, and a microphone, but the present disclosure is not limited thereto.

In an embodiment of the present disclosure, a method, performed by an electronic device, of generating a highlight video based on a keyword is provided. The method may include obtaining one or more keywords included in a plurality of frames of a video. The method may include obtaining importance distribution information corresponding to each of the one or more keywords. The method may include determining at least one highlight keyword among the one or more keywords, based on the importance distribution information. The method may include displaying the at least one highlight keyword. The method may include obtaining an input corresponding to at least a portion of the displayed at least one highlight keyword. The method may include generating a highlight video, based on a highlight keyword corresponding to the input.

In an embodiment of the present disclosure, the obtaining of the one or more keywords included in the video may include obtaining a first frame among the plurality of frames of the video. The obtaining of the one or more keywords included in the video may include obtaining feature information included in the first frame. The feature information may include information indicating at least one of an emotion, an object, an action, a behavior, a situation, a place, or an event included in the first frame. The obtaining of the one or more keywords included in the video may include obtaining the one or more keywords including a keyword corresponding to the feature information.

In an embodiment of the present disclosure, the one or more keywords may include a first keyword The obtaining of the importance distribution information corresponding to each of the one or more keywords may include dividing the video into a plurality of groups based on a division interval. The obtaining of the importance distribution information corresponding to each of the one or more keywords may include identifying the number of frames including the first keyword among a plurality of frames included in a first group among the plurality of groups. The obtaining of the importance distribution information corresponding to each of the one or more keywords may include identifying the number of groups including the first keyword among the plurality of groups. The obtaining of the importance distribution information corresponding to each of the one or more keywords may include obtaining importance distribution information corresponding to the first keyword, based on the number of frames including the first keyword and the number of groups including the first keyword.

In an embodiment of the present disclosure, the obtaining of the importance distribution information corresponding to the first keyword may include determining a total number of keywords included in the first group of the video. The obtaining of the importance distribution information corresponding to the first keyword may include determining a first ratio between the number of frames of the first group including the first keyword and the total number of keywords included in the first group. The obtaining of the importance distribution information corresponding to the first keyword may include determining a second ratio between the number of groups including the first keyword and the number of all groups included in the video. The obtaining of the importance distribution information corresponding to the first keyword may include obtaining the importance distribution information corresponding to the first keyword, based on the first ratio and the second ratio.

In an embodiment of the present disclosure, the obtaining of the importance distribution information corresponding to the first keyword may include obtaining a plurality of confidence scores indicating whether each of the plurality of frames of the first group includes a first keyword. The obtaining of the importance distribution information corresponding to the first keyword may include obtaining the importance distribution information corresponding to the first keyword, based on the plurality of confidence scores, the number of frames, and the number of groups.

In an embodiment of the present disclosure, the one or more keywords may include a second keyword. The importance distribution information corresponding to the second keyword may include an importance score of the second keyword according to a frame or time of the video. The determining of the at least one highlight keyword may include determining the at least one highlight keyword incuding the second keyword, based on the importance score of the second keyword satisfying a defined condition. The determining of the at least one highlight keyword may include determining the at least one highlight keyword excluding the second keyword, based on the importance score of the second keyword not satisfying the defined condition.

In an embodiment of the present disclosure, the generating of the highlight video may include determining a highlight section, based on the highlight keyword corresponding to the input. The generating of the highlight video may include generating the highlight video including a plurality of frames of the video corresponding to the highlight section.

In an embodiment of the present disclosure, the input may include a first input corresponding to a first highlight keyword and a second input corresponding to a second highlight keyword. The determining of the highlight section may include determining a first highlight section, based on first importance distribution information corresponding to the first highlight keyword. The determining of the highlight section may include determining a second highlight section, based on second importance distribution information corresponding to the second highlight keyword. The determining of the highlight section may include determining the highlight section including the first highlight section and the second highlight section.

In an embodiment of the present disclosure, the first importance distribution information may include an importance score of the first highlight keyword according to a frame or time of the video. The first highlight section may include a frame having a maximum importance score of the first highlight keyword and a frame having an importance score of the first highlight keyword greater than a threshold value.

In an embodiment of the present disclosure, the method may include displaying the highlight video. The method may include displaying a highlight keyword corresponding to the highlight section of the displayed highlight video.

In an embodiment of the present disclosure, an electronic device for generating a highlight video based on a keyword is provided. The electronic device may include at least one processor including processing circuitry and memory storing at least one instruction. The at least one instruction, when executed by the at least one processor individually or collectively, may cause the electronic device to obtain one or more keywords included in a plurality of frames of a video. The at least one instruction, when executed by the at least one processor individually or collectively, may cause the electronic device to obtain importance distribution information corresponding to each of the one or more keywords. The at least one instruction, when executed by the at least one processor individually or collectively, may cause the electronic device to determine at least one highlight keyword among the one or more keywords, based on the importance distribution information. The at least one instruction, when executed by the at least one processor individually or collectively, may cause the electronic device to display the at least one highlight keyword. The at least one instruction, when executed by the at least one processor individually or collectively, may cause the electronic device to obtain an input corresponding to at least a portion of the displayed at least one highlight keyword. The at least one instruction, when executed by the at least one processor individually or collectively, may cause the electronic device to generate a highlight video, based on a highlight keyword corresponding to the input.

In an embodiment of the present disclosure, the at least one instruction, when executed by the at least one processor individually or collectively, may cause the electronic device to obtain a first frame among the plurality of frames of the video and obtain feature information included in the first frame. The feature information may include information indicating at least one of an emotion, an object, an action, a behavior, a situation, a place, or an event included in the first frame. The at least one instruction, when executed by the at least one processor individually or collectively, may cause the electronic device to obtain the one or more keywords including a keyword corresponding to the feature information.

In an embodiment of the present disclosure, the one or more keywords may include a first keyword. The at least one instruction, when executed by the at least one processor individually or collectively, may cause the electronic device to divide the video into a plurality of groups based on a division interval. The at least one instruction, when executed by the at least one processor individually or collectively, may cause the electronic device to identify the number of frames including the first keyword among a plurality of frames included in a first group among the plurality of groups. The at least one instruction, when executed by the at least one processor individually or collectively, may cause the electronic device to identify the number of groups including the first keyword among the plurality of groups. The at least one instruction, when executed by the at least one processor individually or collectively, may cause the electronic device to obtain importance distribution information corresponding to the first keyword, based on the number of frames including the first keyword and the number of groups including the first keyword.

In an embodiment of the present disclosure, the at least one instruction, when executed by the at least one processor individually or collectively, may cause the electronic device to determine a total number of keywords included in the first group of the video. The at least one instruction, when executed by the at least one processor individually or collectively, may cause the electronic device to determine a first ratio between the number of frames of the first group including the first keyword and the total number of keywords included in the first group. The at least one instruction, when executed by the at least one processor individually or collectively, may cause the electronic device to determine a second ratio between the number of groups including the first keyword and the number of all groups included in the video. The at least one instruction, when executed by the at least one processor individually or collectively, may cause the electronic device to obtain the importance distribution information corresponding to the first keyword, based on the first ratio and the second ratio.

In an embodiment of the present disclosure, the at least one instruction, when executed by the at least one processor individually or collectively, may cause the electronic device to obtain a plurality of confidence scores indicating whether each of the plurality of frames of the first group includes a first keyword. The at least one instruction, when executed by the at least one processor individually or collectively, may cause the electronic device to obtain the importance distribution information corresponding to the first keyword, based on the plurality of confidence scores, the number of frames, and the number of groups.

In an embodiment of the present disclosure, the one or more keywords may include a second keyword. Importance distribution information corresponding to the second keyword may include an importance score of the second keyword according to a frame or time of the video. The at least one instruction, when executed by the at least one processor individually or collectively, may cause the electronic device to determine the at least one highlight keyword including the second keyword, based on the importance score of the second keyword satisfying a defined condition. The at least one instruction, when executed by the at least one processor individually or collectively, may cause the electronic device to determine the at least one highlight keyword excluding the second keyword, based on the importance score of the second keyword not satisfying the defined condition.

In an embodiment of the present disclosure, the at least one instruction, when executed by the at least one processor individually or collectively, may cause the electronic device to determine a highlight section, based on the highlight keyword corresponding to the input. The at least one instruction, when executed by the at least one processor individually or collectively, may cause the electronic device to generate the highlight video including a plurality of frames of the video corresponding to the highlight section.

In an embodiment of the present disclosure, the input may include a first input corresponding to a first highlight keyword and a second input corresponding to a second highlight keyword. The at least one instruction, when executed by the at least one processor individually or collectively, may cause the electronic device to determine a first highlight section, based on first importance distribution information corresponding to the first highlight keyword. The at least one instruction, when executed by the at least one processor individually or collectively, may cause the electronic device to determine a second highlight section, based on second importance distribution information corresponding to the second highlight keyword. The at least one instruction, when executed by the at least one processor individually or collectively, may cause the electronic device to determine the highlight section including the first highlight section and the second highlight section.

In an embodiment of the present disclosure, the first importance distribution information may include an importance score of the first highlight keyword according to a frame or time of the video. The first highlight section may include a frame having a maximum importance score of the first highlight keyword and a frame having an importance score of the first highlight keyword greater than a threshold value.

In an embodiment of the present disclosure, the at least one instruction, when executed by the at least one processor individually or collectively, may cause the electronic device to display the highlight video. The at least one instruction, when executed by the at least one processor individually or collectively, may cause the electronic device to display a highlight keyword corresponding to the highlight section of the displayed highlight video.

In an embodiment of the present disclosure, a computer-readable recording medium having recorded thereon a program for executing any one of the above-described methods and methods to be described below for performing an operation of an electronic device may be provided.

An embodiment of the present disclosure may also be implemented as a recording medium, e.g., a program module to be executed in computers, which includes computer-readable instructions. The computer-readable recording medium may include any usable medium that may be accessed by computers, volatile and non-volatile medium, and detachable and non-detachable medium. The computer-readable recording medium may include a computer storage medium and a communication medium. The computer storage medium includes all volatile and non-volatile media, and detachable and non-detachable media which are technically implemented to store information including computer-readable instructions, data structures, program modules or other data. The communication medium includes computer-readable instructions, a data structure, a program module, or other data such as modulation-type data signals.

The computer-readable recording medium according to an embodiment of the present disclosure may be provided in the form of a non-transitory recording medium. Here, the term "non-transitory storage medium" may mean that the storage medium is a tangible device and does not include signals (e.g., electromagnetic waves), and may mean that data may be permanently or temporarily stored in the storage medium. For example, the "non-transitory storage medium" may include a buffer in which data is temporarily stored.

A method according to an embodiment of the present disclosure may be included and provided in a computer program product. The computer program product may be traded as a product between a seller and a buyer. The computer program product may be distributed in the form of a machine-readable storage medium (e.g., a compact disc read only memory (CD-ROM)) or may be distributed (e.g., downloaded or uploaded) online through an application store or directly between two user apparatuses (e.g., smartphones). In a case of online distribution, at least a portion of the computer program product (e.g., a downloadable application) may be at least temporarily stored or temporarily generated in a machine-readable storage medium such as a manufacturer's server, a server of an application store, or a memory of a relay server.

While the present disclosure has been particularly shown and described with reference to the accompanying drawings, in which embodiments of the present disclosure are shown, it is obvious to one of ordinary skill in the art that the present disclosure may be easily embodied in many different forms without changing the technical concept or essential features of the present disclosure. Thus, it should be understood that the embodiments described herein should be considered in a descriptive sense only and not for purposes of limitation. For example, configuring elements that are singular forms may be executed in a distributed fashion, and also, configuring elements that are distributed may be combined and then executed.

The scope of the present disclosure is defined by the appended claims, rather than defined by the aforementioned detailed descriptions, and all differences and modifications that can be derived from the meanings and scope of the claims and other equivalent embodiments therefrom will be construed as being included in the present disclosure.

## Claims

1. A method, performed by an electronic device, of generating a highlight video based on a keyword, the method comprising:
obtaining one or more keywords included in a plurality of frames of a video (S210);
obtaining importance distribution information corresponding to each of the one or more keywords (S220);
determining at least one highlight keyword among the one or more keywords, based on the importance distribution information (S230);
displaying the at least one highlight keyword (S240);
obtaining an input corresponding to at least a portion of the displayed at least one highlight keyword (S250); and
generating a highlight video, based on a highlight keyword corresponding to the input (S260).

2. The method of claim 1, wherein the obtaining of the one or more keywords included in the video (S210) comprises:
obtaining a first frame among the plurality of frames of the video;
obtaining feature information included in the first frame, wherein the feature information includes information indicating at least one of an emotion, an object, an action, a behavior, a situation, a place, or an event included in the first frame; and
obtaining the one or more keywords including a keyword corresponding to the feature information.

3. The method of any one of claims 1 to 2, wherein
the one or more keywords include a first keyword, and
the obtaining of the importance distribution information corresponding to each of the one or more keywords (S220) comprises:
dividing the video into a plurality of groups based on a division interval;
identifying the number of frames comprising the first keyword among a plurality of frames included in a first group among the plurality of groups;
identifying the number of groups comprising the first keyword among the plurality of groups; and
obtaining importance distribution information corresponding to the first keyword, based on the number of frames comprising the first keyword and the number of groups comprising the first keyword.

4. The method of claim 3, wherein the obtaining of the importance distribution information corresponding to the first keyword comprises:
determining a total number of keywords included in the first group of the video;
determining a first ratio between the number of frames of the first group comprising the first keyword and the total number of keywords included in the first group;
determining a second ratio between the number of groups comprising the first keyword and the number of all groups included in the video; and
obtaining the importance distribution information corresponding to the first keyword, based on the first ratio and the second ratio.

5. The method of any one of claims 3 to 4, wherein the obtaining of the importance distribution information corresponding to the first keyword comprises:
obtaining a plurality of confidence scores indicating whether each of the plurality of frames of the first group includes the first keyword; and
obtaining the importance distribution information corresponding to the first keyword, based on the plurality of confidence scores, the number of frames, and the number of groups.

6. The method of any one of claims 1 to 5, wherein
the one or more keywords include a second keyword,
importance distribution information corresponding to the second keyword includes an importance score of the second keyword according to a frame or time of the video, and
the determining of the at least one highlight keyword (S230) comprises:
determining the at least one highlight keyword including the second keyword, based on the importance score of the second keyword satisfying a defined condition; and
determining the at least one highlight keyword excluding the second keyword, based on the importance score of the second keyword not satisfying the defined condition.

7. The method of any one of claims 1 to 6, wherein the generating of the highlight video (S260) comprises:
determining a highlight section, based on the highlight keyword corresponding to the input; and
generating the highlight video comprising a plurality of frames of the video corresponding to the highlight section.

8. The method of claim 7, wherein the input includes a first input corresponding to a first highlight keyword and a second input corresponding to a second highlight keyword, and
the determining of the highlight section comprises:
determining a first highlight section, based on first importance distribution information corresponding to the first highlight keyword;
determining a second highlight section, based on second importance distribution information corresponding to the second highlight keyword; and
determining the highlight section comprising the first highlight section and the second highlight section.

9. The method of claim 8, wherein
the first importance distribution information comprises an importance score of the first highlight keyword according to a frame or time of the video, and
the first highlight section includes a frame having a maximum importance score of the first highlight keyword and a frame having an importance score of the first highlight keyword greater than a threshold value.

10. The method of any one of claims 7 to 9, further comprising:
displaying the highlight video; and
displaying a highlight keyword corresponding to the highlight section of the displayed highlight video.

11. An electronic device (100) for generating a highlight video based on a keyword, the electronic device (100) comprising:
at least one processor (1810) comprising processing circuitry; and
memory (1820) storing at least one instruction, wherein the at least one instruction, when executed by the at least one processor (1810) individually or collectively, causes the electronic device (100) to:
obtain one or more keywords included in a plurality of frames of a video;
obtain importance distribution information corresponding to each of the one or more keywords;
determine at least one highlight keyword among the one or more keywords, based on the importance distribution information;
display the at least one highlight keyword;
obtain an input corresponding to at least a portion of the displayed at least one highlight keyword; and
generate a highlight video, based on a highlight keyword corresponding to the input.

12. The electronic device (100) of claim 11, wherein the at least one instruction, when executed by the at least one processor (1810) individually or collectively, causes the electronic device (100) to:
obtain a first frame among the plurality of frames of the video;
obtain feature information included in the first frame, wherein the feature information includes information indicating at least one of an object, an action, a behavior, a situation, a place, or an event included in the first frame; and
obtain the one or more keywords including a keyword corresponding to the feature information.

13. The electronic device (100) of any one of claims 11 to 12, wherein
the one or more keywords include a first keyword, and
the at least one instruction, when executed by the at least one processor (1810) individually or collectively, causes the electronic device (100) to:
divide the video into a plurality of groups based on a division interval;
identify the number of frames comprising the first keyword among a plurality of frames included in a first group among the plurality of groups;
identify the number of groups comprising the first keyword among the plurality of groups; and
obtain importance distribution information corresponding to the first keyword, based on the number of frames comprising the first keyword and the number of groups comprising the first keyword.

14. The electronic device (100) of claim 13, wherein the at least one instruction, when executed by the at least one processor (1810) individually or collectively, causes the electronic device (100) to:
determine a total number of keywords included in the first group of the video;
determine a first ratio between the number of frames of the first group comprising the first keyword and the total number of keywords included in the first group;
determine a second ratio between the number of groups comprising the first keyword and the number of all groups included in the video; and
obtain the importance distribution information corresponding to the first keyword, based on the first ratio and the second ratio.

15. A computer-readable recording medium having recorded thereon a program for executing, on a computer, the method of any one of claims 1 to 10.
